# FASCICULE DE BREVET EUROPEEN

(11) **EP 2 338 779 B1**
(45) Date de publication et mention de la délivrance du brevet: **22.03.2017**
(21) Numéro de dépôt: 10163037.4
(22) Date de dépôt: 17.05.2010
(51) Int. Cl.: B62M 6/40, B62H 5/00, B62H 3/02

(54) **Système automatique de stockage de cycles, cycle pour un tel système et structure d'accueil pour un tel cycle**
Automatisches System zur Lagerung von Fahrrädern, Fahrrad für ein solches System und Aufnahmestruktur für ein solches Fahrrad
Automatic cycle storage system, cycle for such a system and structure for receiving such a cycle

(30) Priorité: 22.12.2009 FR 0959442
(43) Date de publication de la demande: 29.06.2011
(60) Demande divisionnaire: 14166519.0
(73) Titulaire: JCDecaux SA, 92200 Neuilly-Sur-Seine (FR)
(72) Inventeur: Gagosz, Jean-Claude, 28410, Bu (FR); Zeferino, Emmanuel, 78180, Montigny le Bretonneux (FR); Baumann, Eric, 78810, Feucherolles (FR); Tavernier, Patrick, 78000, Versailles (FR)
(74) Mandataire: Cabinet Plasseraud

(56) Documents cités:
- EP-A1- 1 820 722
- EP-A1- 2 090 501
- KR-U- 20100 001 311

## Description

### DOMAINE DE L'INVENTION

La présente invention est relative aux systèmes automatiques de stockage de cycles, aux cycles pour de tels systèmes et aux structures d'accueil pour de tels cycles.

Plus particulièrement, l'invention concerne un système automatique de stockage de cycles comprenant :
- une pluralité de cycles (par exemple des bicyclettes) comportant chacun :
   - un dispositif de stockage d'énergie électrique,
   - des contacts électriques,
   - un circuit d'alimentation électrique reliant le dispositif de stockage d'énergie électrique auxdits contacts électriques,
- une pluralité de structures d'accueil fixes sur lesquelles peuvent se verrouiller lesdits cycles et comportant chacune :
   - au moins une unité centrale électronique,
   - un circuit d'alimentation électrique relié à l'unité centrale électronique de la structure d'accueil,
   - des contacts électriques adaptés pour venir en contact mutuel avec les contacts électriques respectifs d'un cycle verrouillé sur la structure d'accueil, en reliant le circuit d'alimentation électrique du cycle au circuit d'alimentation électrique de la structure d'accueil,
- un dispositif de commande externe communiquant avec l'unité centrale de la structure d'accueil et étant adapté pour sélectivement autoriser l'emprunt des cycles verrouillés sur les structures d'accueil.

Un système de stockage de cycles tel que décrit ci-dessus peut être utilisé par exemple pour mettre des cycles à disposition du public, moyennant identification de l'emprunteur du cycle et éventuellement paiement d'une location.

### ARRIERE PLAN DE L'INVENTION

Le document EP-A-1 820 722 décrit un exemple d'un tel système de stockage de cycles.

### OBJETS DE L'INVENTION

La présente invention a notamment pour but de diminuer la consommation d'un tel système en électricité provenant du réseau électrique public.

A cet effet, selon l'invention, un système automatique de stockage de cycles du genre en question est caractérisé en ce que les circuits d'alimentation électrique du cycle et de la structure d'accueil sont adaptés pour permettre au dispositif de stockage d'énergie électrique du cycle d'alimenter électriquement le circuit d'alimentation électrique de la structure d'accueil lorsque le cycle est verrouillé sur la structure d'accueil, et en ce que le circuit d'alimentation électrique de la structure d'accueil n'est relié à aucune source externe d'énergie électrique autre que le dispositif de stockage d'énergie électrique du cycle, et l'unité centrale électronique de la structure d'accueil communique avec le dispositif de commande externe par une liaison sans fil.

Grâce à ces dispositions, on permet à la structure d'accueil d'être alimentée électriquement par le cycle qui est verrouillé sur cette structure d'accueil, et diminue donc, voire on supprime totalement, la consommation électrique de la structure d'accueil en électricité provenant du réseau électrique public.

Dans différents modes de réalisation du système automatique de stockage de cycles selon l'invention, on peut éventuellement avoir recours en outre à l'une et/ou à l'autre des dispositions suivantes (utilisables éventuellement indépendamment les unes des autres et indépendamment des dispositions précitées) :
- les circuits d'alimentation électrique du cycle et de la structure d'accueil sont adaptés pour permettre uniquement un déchargement du dispositif de stockage d'énergie électrique du cycle vers le circuit d'alimentation électrique de la structure d'accueil, mais non l'inverse ;
- chaque structure d'accueil comporte un dispositif de stockage d'énergie électrique relié au circuit d'alimentation électrique de la structure d'accueil pour alimenter l'unité centrale électronique de la structure d'accueil, les circuits d'alimentation électrique du cycle et de la structure d'accueil étant adaptés pour permettre au dispositif de stockage d'énergie électrique du cycle de charger le dispositif de stockage d'énergie électrique de la structure d'accueil lorsque le cycle est verrouillé sur la structure d'accueil ;
- chaque cycle comporte en outre un générateur électrique adapté pour charger le dispositif de stockage d'énergie électrique du cycle et pour être entraîné par le roulage dudit cycle ;
- ladite liaison sans fil est une liaison radio ;
- le cycle comporte un circuit électronique relié auxdits contacts électriques du cycle et ladite unité centrale de la structure d'accueil est adaptée pour échanger des informations avec le circuit électronique du cycle par l'intermédiaire desdits contacts électriques du cycle et de la structure d'accueil lorsqu'ils sont en contact mutuel ;
- le dispositif de commande externe comporte au moins un serveur central et plusieurs postes centraux de stations correspondant chacun à une station de stockage de cycles, les postes centraux de stations communiquant d'une part, avec le serveur central et d'autre part, avec au moins une unité centrale électronique d'une structure d'accueil appartenant à la même station de stockage de cycles ;
- chaque cycle comporte un organe de verrouillage et chaque structure d'accueil comporte au moins un verrou électrique commandé par l'unité centrale électronique de la structure d'accueil et adapté pour retenir l'organe de verrouillage de l'un des cycles en verrouillant ainsi ledit cycle sur la structure d'accueil, ledit verrou électrique étant alimenté électriquement par le dispositif de stockage d'énergie électrique de la structure d'accueil ;
- chaque structure d'accueil comporte au moins un poste de verrouillage adapté pour recevoir un cycle et incluant :
- une gâche ouverte selon une direction d'engagement et adaptée pour recevoir l'organe de verrouillage d'un cycle par emboîtement selon ladite direction d'engagement,
- et ledit verrou électrique, comportant un organe de blocage mobile entre d'une part, une position de verrouillage où ledit organe de blocage est adapté pour bloquer l'organe de verrouillage du cycle dans la gâche et d'autre part, une position de déverrouillage où l'organe de blocage est adapté pour permettre à l'organe de verrouillage d'entrer et sortir de la gâche ;
- les contacts électriques du cycle et de la structure d'accueil sont en contact mutuel selon une direction d'appui sensiblement perpendiculaire à la direction d'engagement lorsque le cycle est verrouillé sur la structure d'accueil ;
- les contacts électriques du cycle et de la structure d'accueil sont en contact mutuel selon ladite direction d'engagement lorsque le cycle est verrouillé sur la structure d'accueil ;
- la direction d'engagement est sensiblement verticale, la gâche étant ouverte vers le haut ;
- l'organe de verrouillage du cycle comporte une barre transversale s'étendant selon un axe longitudinal entre deux extrémités, la gâche comporte au moins une auge de réception ouverte dans ladite direction d'engagement et adaptée pour recevoir ladite barre transversale avec son axe longitudinal disposé sensiblement selon un axe horizontal fixe défini par l'auge de réception, et le verrou comporte au moins un organe d'actionnement qui est en liaison avec l'organe de blocage, ledit organe d'actionnement étant mobile avec l'organe de blocage dans un plan vertical perpendiculaire audit axe horizontal fixe, entre :
- une première position correspondant à la position de déverrouillée du verrou, où ledit organe d'actionnement est disposé pour interférer avec la barre transversale de l'organe de verrouillage lorsque ladite barre transversale est engagée dans l'auge de réception dans la direction d'engagement,
- et une deuxième position correspondant à la position verrouillée du verrou, ladite barre transversale de l'organe de verrouillage étant adaptée pour déplacer l'organe d'actionnement de sa première à sa deuxième position lorsque ladite barre transversale est introduite dans l'auge de réception, et ledit organe d'actionnement étant adapté pour actionner le verrou lorsqu'il passe de sa première à sa deuxième position en déplaçant l'organe de blocage en position de verrouillage ;
- l'organe de blocage et l'organe d'actionnement appartiennent à une même pièce de verrou qui est montée pivotante entre les positions de verrouillage et de déverrouillage, autour d'un axe de rotation horizontal sensiblement parallèle audit axe horizontal fixe défini par l'auge de réception ;
- la pièce de verrou est sollicitée élastiquement vers la position de déverrouillage et le verrou électrique comporte une gâchette qui est mobile entre d'une part, une position de butée où ladite gâchette est adaptée pour maintenir la pièce de verrou en position de verrouillage et d'autre part, une position escamotée où ladite gâchette permet à la pièce de verrou de passer en position de verrouillage, la gâchette étant sollicitée élastiquement vers la position de butée et le verrou électrique comportant en outre un actionneur électrique adapté pour déplacer le gâchette de sa position de butée à sa position escamotée ;
- la pièce de verrou comporte une plaque de verrou qui s'étend sensiblement perpendiculairement à l'axe horizontal fixe et qui comporte une échancrure adaptée pour recevoir la barre transversale, ladite plaque de verrou formant deux becs qui encadrent ladite échancrure et constituent respectivement l'organe de blocage et l'organe d'actionnement ;
- l'organe de verrouillage du cycle comporte une pièce de liaison solidaire de la barre transversale et formant un T avec cette barre transversale, et la pièce de verrou comporte deux plaques de verrou solidarisées entre elles et adaptées pour s'engager sur la barre transversale de part et d'autre de la pièce de liaison ;
- l'auge de réception et l'échancrure de la plaque de verrou sont adaptées pour permettre une rotation de la barre transversale autour de son axe longitudinal ;
- la gâche comporte deux auges de réception disposées pour recevoir chacune une extrémité de la barre transversale ;
- la gâche comporte également des parois latérales coopérant chacune par butée avec une extrémité de la barre transversale pour centrer ladite barre transversale lorsque le cycle est verrouillé sur le poste de verrouillage ;
- le cycle comporte un guidon solidaire d'une fourche qui porte la roue avant, l'organe de verrouillage du cycle étant solidaire de la fourche du cycle ;
- la structure d'accueil forme une borne comportant une fente adaptée pour recevoir la roue avant du cycle lorsqu'il est verrouillé sur ladite structure d'accueil ;
- la structure d'accueil comporte une poutre sensiblement horizontale comportant plusieurs postes de verrouillage ;
- la structure d'accueil comporte au moins un dispositif de stockage d'énergie électrique et les circuits d'alimentation électrique du cycle et de la structure d'accueil sont adaptés pour permettre un rechargement du dispositif de stockage d'énergie électrique de la structure d'accueil par le dispositif de stockage d'énergie électrique du cycle tant que le dispositif de stockage d'énergie électrique du cycle présente une charge supérieure à un niveau de charge minimum non nul ;
- la structure d'accueil est reliée à au moins une source d'énergie électrique et comporte au moins un dispositif de stockage d'énergie électrique, le circuit d'alimentation électrique de la structure d'accueil étant adapté pour permettre un rechargement du dispositif de stockage d'énergie électrique de la structure d'accueil par ladite source d'énergie électrique lorsque dispositif de stockage d'énergie électrique de la structure d'accueil atteint un seuil bas de charge.

Par ailleurs, l'invention a également pour objet une structure d'accueil pour un système de stockage automatique de cycles tel que défini ci-dessus, adaptée pour verrouiller un cycle qui comporte un dispositif de stockage d'énergie électrique, des contacts électriques, et un circuit d'alimentation électrique reliant le dispositif de stockage d'énergie électrique auxdits contacts électriques, ladite structure d'accueil comprenant :
- au moins une unité centrale électronique adaptée pour sélectivement autoriser l'emprunt d'un cycle verrouillé sur la structure d'accueil,
- un circuit d'alimentation électrique relié à l'unité centrale électronique de la structure d'accueil,
- des contacts électriques adaptés pour venir en contact mutuel avec les contacts électriques respectifs d'un cycle verrouillé sur la structure d'accueil, en reliant le circuit d'alimentation électrique du cycle au circuit d'alimentation électrique de la structure d'accueil,
caractérisée en ce que le circuit d'alimentation électrique de la structure d'accueil est adapté pour être alimenté électriquement par le dispositif de stockage d'énergie électrique du cycle lorsque le cycle est verrouillé sur la structure d'accueil,
en ce que ledit circuit d'alimentation de la structure d'accueil n'étant relié à aucune source externe d'énergie électrique autre que le dispositif de stockage d'énergie électrique du cycle,
et en ce que l'unité centrale électronique de la structure d'accueil est reliée à une interface de communication adaptée pour communiquer avec un dispositif de commande externe par une liaison sans fil.

### BREVE DESCRIPTION DES DESSINS

D'autres caractéristiques et avantages de l'invention apparaîtront au cours de la description suivante de plusieurs de ses formes de réalisation, données à titre d'exemples non limitatifs, en regard des dessins joints.

Sur les dessins :
- la figure 1 est une vue schématique en perspective montrant un système automatique de stockage de cycles selon une première forme de réalisation de l'invention,
- la figure 2 est une vue de détail montrant le verrouillage d'un cycle sur l'une des bornes formant les structures d'accueil de cycles de la figure 1,
- la figure 3 est une vue de détail montrant l'organe de verrouillage porté par le cycle de la figure 2,
- la figure 4 est une vue de côté de la borne sur laquelle est verrouillé le cycle de la figure 2,
- la figure 5 est une vue éclatée simplifiée de la gâche de la borne de la figure 4,
- la figure 6 est un schéma de principe illustrant le fonctionnement de la gâche de la figure 5, présenté sous la forme d'une coupe prise selon la ligne VI-VI de la figure 5,
- la figure 7 est un schéma bloc illustrant les composants électriques principaux du système de stockage de cycles des figures 1 à 6,
- la figure 8 est une vue schématique en perspective montrant un système automatique de stockage de cycles selon une deuxième forme de réalisation de l'invention,
- la figure 9 est une vue en perspective d'un des cycles du système de la figure 8,
- la figure 10 est une vue de détail de l'organe de verrouillage du cycle de la figure 9, vu de trois quarts par-dessous,
- la figure 11 est une vue en coupe d'une partie de l'organe de verrouillage de la figure 10, montrant des contacts électriques prévus dans cet organe de verrouillage,
- la figure 12 est une vue de côté du cycle de la figure 9 verrouillé sur une des bornes formant les structures d'accueil de cycles du système de la figure 8,
- la figure 13 est une vue de détail en perspective de la borne de la figure 12 en position de verrouillage, le cycle étant omis pour plus de clarté,
- la figure 14 est une vue en coupe verticale de la gâche de la borne de la figure 13, au niveau d'une auge de réception latérale comportant des contacts électriques,
- la figure 15 est une vue en perspective, de trois quarts arrière, de la gâche de la borne de verrouillage de la figure 13, en position de verrouillage,
- les figures 16 et 17 sont des vues en perspective, selon deux directions différentes, montrant le verrou électrique qui équipe la gâche de la borne de verrouillage de la figure 13, en position de verrouillage,
- la figure 18 est une vue en coupe verticale du verrou électrique des figures 16 et 17, la coupe étant prise selon le plan médian de ce verrou électrique,
- la figure 19 est un schéma bloc du système automatique de stockage de cycles selon la deuxième forme de réalisation de l'invention,
- la figure 20 est une vue en coupe verticale, dans le même plan médian que la figure 18, montrant la gâche de la borne de verrouillage de la figure 13 avec son verrou électrique en position de déverrouillage,
- la figure 21 est une vue similaire à la figure 19, montrant la gâche en perspective et en coupe verticale,
- la figure 22 est une vue en perspective montrant un système automatique de stockage de cycles selon une troisième forme de réalisation de l'invention,
- les figures 23 et 24 sont des vues similaires respectivement aux figures 10 et 13, dans une quatrième forme de réalisation de l'invention,
- la figure 25 est une vue en perspective montrant un cycle verrouillé sur une structure d'accueil, dans une cinquième forme de réalisation de l'invention,
- les figures 26 et 27 sont des vues partielles en coupe verticale, illustrant le verrouillage du cycle de la figure 25 sur sa structure d'accueil, et montrant le verrou électrique de la structure d'accueil respectivement en position déverrouillée et en position verrouillée,
- les figures 28 et 29 sont des vues en perspective illustrant deux variantes de la cinquième forme de réalisation de l'invention,
- la figure 30 est une vue de détail en perspective montrant l'organe d'accrochage d'un cycle de la cinquième forme de réalisation de l'invention,
- la figure 31 est une vue en coupe verticale de l'organe d'accrochage de la figure 30.

### DESCRIPTION PLUS DETAILLEE

Sur les différentes figures, les mêmes références désignent des éléments identiques ou similaires.

### Première forme de réalisation

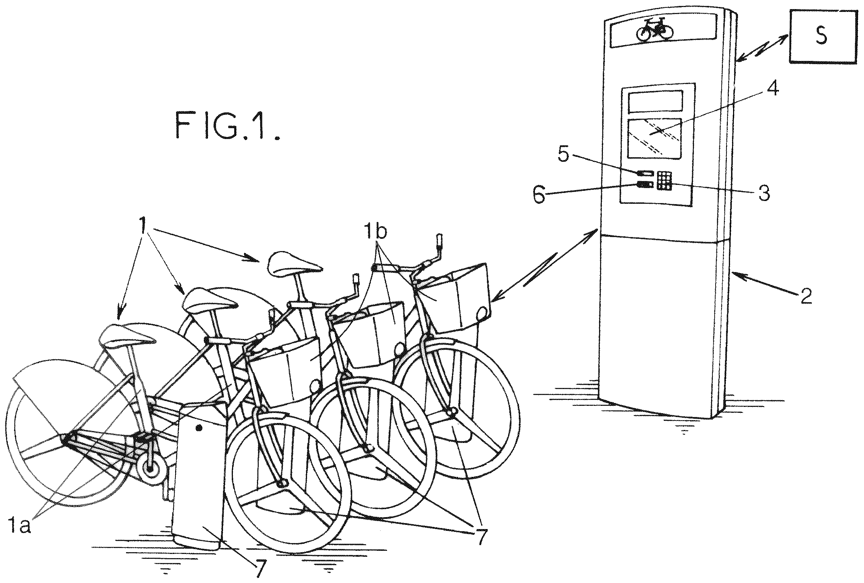

Comme représenté sur la figure 1, la présente invention concerne un système automatique de stockage de cycles 1 tels que notamment des bicyclettes, permettant par exemple de stocker des cycles sur la voie publique de façon à les mettre à disposition du public.

Ce système automatique de stockage de cycles peut comporter plusieurs stations de stockage de cycles, dont une est représentée sur la figure 1. Chaque station de stockage de cycles comprend un poste central de station 2, qui se présente ici sous la forme d'une borne interactive dotée d'une interface utilisateur comprenant par exemple un clavier 3, un écran 4, un lecteur de cartes portatives électroniques 5, un dispositif 6 d'impression de tickets, etc. En variante, la borne interactive 2 pourrait ne pas comporter d'interface utilisateur et être une simple passerelle de communication entre la station de stockage de cycles et un serveur central S.

La borne interactive 2 communique d'une part, avec le serveur central S qui gère les abonnements et les locations de cycles, et d'autre part, avec une pluralité de structures d'accueil 7 qui permettent de verrouiller les cycles pendant leur stockage et qui peuvent par exemple se présenter sous la forme de bornes de verrouillage fixées au sol sur la voie publique. Chaque borne de verrouillage est ici adaptée pour permettre le verrouillage d'un seul cycle 1, et constitue ainsi un seul poste de verrouillage de cycle.

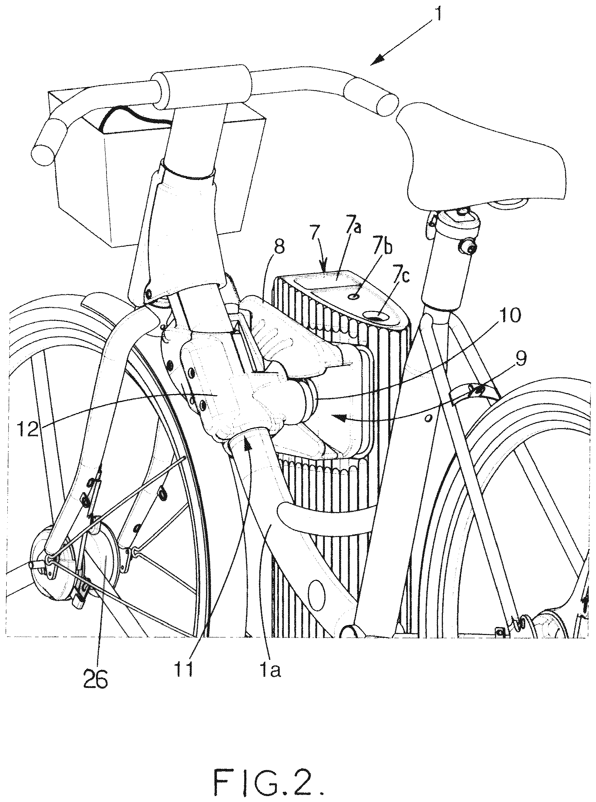

Comme on peut le voir sur la figure 2, chaque structure d'accueil 7 comporte une gâche 8 formant un boîtier rigide doté d'une ouverture échancrée 9 ouverte horizontalement et adaptée pour recevoir et retenir un organe de verrouillage 10 appartenant à un dispositif de verrouillage 11 solidaire par exemple du cadre la d'un des cycles 1.

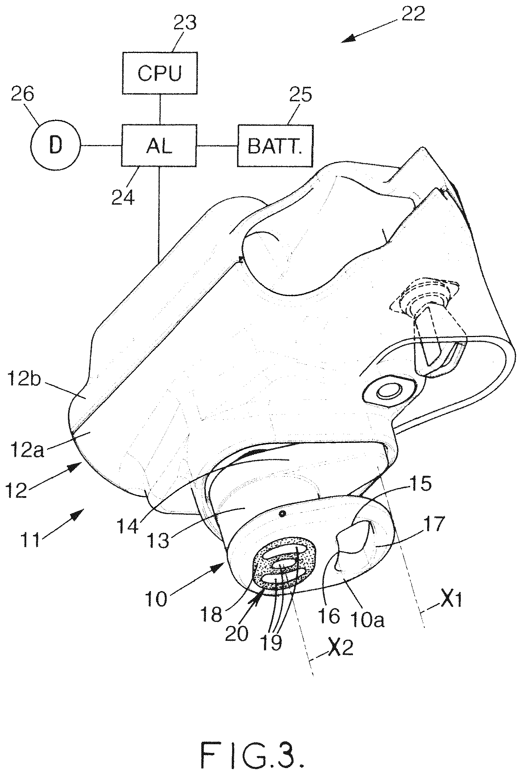

Comme on peut le voir sur la figure 3, le dispositif de verrouillage 11 peut comporter un support 12, qui peut par exemple être réalisé en deux parties 12a, 12b, solidarisées ensemble en venant enserrer l'un des tubes du cadre la du cycle. L'organe de verrouillage 10 peut éventuellement être monté mobile sur le support 12 de façon à permettre un certain débattement de l'organe de verrouillage 10 au moins verticalement par rapport audit cycle, comme expliqué dans le document EP-A-1 820 721.

Plus particulièrement, l'organe de verrouillage 10 peut être monté pivotant par rapport au support 12, autour d'un axe de rotation horizontal X1 perpendiculaire au plan moyen de l'organe de verrouillage 10. Dans l'exemple représenté sur les dessins, l'organe de verrouillage 10 comprend une plaque métallique verticale 10a qui est solidarisée à un moyeu 13 cylindrique de révolution présentant un axe central X2 parallèle à l'axe X1 et décalé par rapport à X1, le moyeu 13 étant lui-même solidaire d'un bras de levier 14 qui est monté pivotant sur le support 12 autour de l'axe de rotation X1.

L'organe de verrouillage 10 s'étend vers l'avant, c'est-à-dire vers l'axe de rotation X1, à partir du moyeu 13. A son extrémité avant, ledit organe de verrouillage 10 comporte un évidement traversant 15 qui est ouvert parallèlement aux axes X1, X2, et qui présente des bords en arc de cercle radialement intérieur 16 et radialement extérieur 17, sensiblement centrés sur l'axe central X2. De plus, en correspondance avec le moyeu 13, la plaque 10a de l'organe de verrouillage 10 comporte une zone électriquement isolante 18, orientée à l'opposé du boîtier 12, dans laquelle sont disposés des contacts électriques 19 métalliques formant une interface électrique 20. Ces contacts électriques 19 peuvent par exemple être au nombre de trois et comprendre par exemple :
- un contact central, plan et disposé en correspondance avec l'axe central X2, ce contact central étant de préférence allongé sensiblement horizontalement,
- et deux contacts de forme générale incurvée, allongés sensiblement horizontalement, qui sont disposés de part et d'autre du contact central, ces contacts de forme générale incurvée étant plans et présentant chacun un contour de forme incurvée, avec une concavité tournée vers l'axe central X2.

On notera que l'organe de verrouillage 10 pourrait comporter un nombre de contacts électriques 19 différent de trois (par exemple deux contacts).

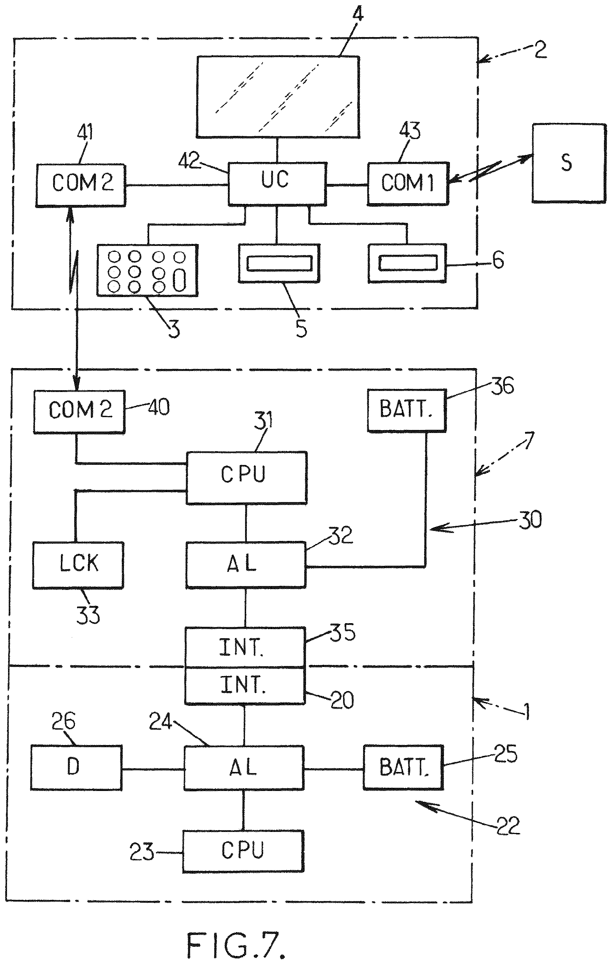

Les contacts électriques 19 permettent, lorsque le cycle 1 est verrouillé sur une structure d'accueil 7, de relier électriquement ladite structure d'accueil à un circuit électrique 22 appartenant au cycle 1, représenté sur la figure 7.

Ce circuit électrique 22 peut comprendre par exemple au moins :
- une unité centrale électronique 23 (CPU) telle qu'un microprocesseur ou microcontrôleur, adaptée pour communiquer avec la structure d'accueil 7,
- un circuit d'alimentation électrique 24 basse tension (AL) fonctionnant par exemple sous 6V ou 3V, qui alimente l'unité centrale électronique 23,
- une batterie 25 basse tension (BATT.) reliée au circuit d'alimentation électrique 24,
- et un générateur électrique tel qu'une dynamo, par exemple une dynamo-moyeu 26 (D) qui peut être logée par exemple dans le moyeu du cycle (voir figure 2) pour générer du courant électrique lors du roulage du cycle, ce générateur électrique étant également relié au circuit d'alimentation électrique pour charger la batterie 25.

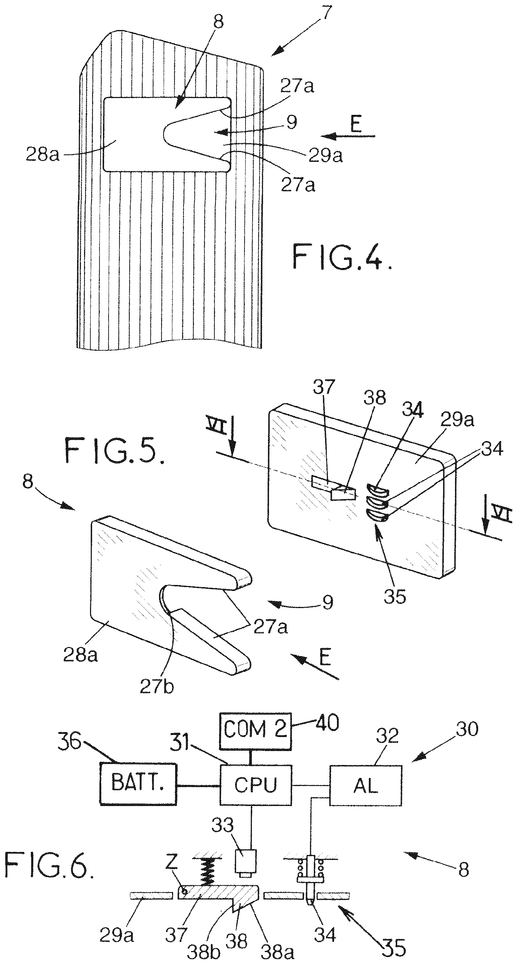

Comme représenté sur les figures 4 et 5, l'ouverture échancrée 9 de la gâche 8 comporte avantageusement deux guides 27a en forme de rampes convergeant l'une vers l'autre dans la direction horizontale d'engagement E de l'organe de verrouillage 10 dans la gâche 8. Ces guides 27a sont à adapter pour coopérer avec la plaque 10a de l'organe de verrouillage pour déplacer l'organe de verrouillage 10 autour de l'axe de rotation X1 jusqu'à une position nominale de verrouillage relativement à la gâche 8. On assure ainsi que l'organe de verrouillage 10 et plus particulièrement l'évidemment 15 de cet organe de verrouillage, se trouve à bonne hauteur par rapport à la gâche 10 après insertion dans ladite gâche, dans la direction d'engagement E.

Comme on peut le voir sur la figure 5, la gâche 8 comporte un boîtier 28a, incluant par exemple l'ouverture échancrée 9 et les guides 27a, et une embase 29a.

Comme on peut le voir sur les figures 6 et 7, l'embase 29a peut comporter un circuit électrique 30 comprenant par exemple :
- une unité centrale électronique 31 (CPU) telle qu'un microprocesseur ou microcontrôleur,
- un circuit d'alimentation électrique 32 (AL) basse tension (fonctionnant à la même tension que le circuit d'alimentation électrique 24 du cycle, par exemple sous 3V ou 6V) alimentant l'unité centrale 31,
- un électro-aimant 33 de commande de verrou (LCK) alimenté par le circuit d'alimentation électrique 32 et commandé par l'unité centrale 31,
- des contacts électriques 34, par exemple au nombre de trois, reliés au circuit d'alimentation électrique 32 et formant une interface électrique 35,
- une batterie 36 (BATT.) alimentant le circuit 32 sous basse tension,
- une interface de communication sans fil 40 (COM 2) reliée à l'unité centrale 31 et permettant de communiquer avec la borne interactive 2 sous un protocole radio courte portée tels que les protocoles BLUETOOTH, ZIGBEE ou autres,
- éventuellement, divers accessoires reliés à l'unité centrale 31, par exemple un lecteur de carte sans contact 7a, un voyant 7b et un bouton de commande 7c disposés par exemple sur la face supérieure de la borne 7 (voir la figure 2) pouvant servir par exemple à déclencher le déverrouillage d'un cycle 1 verrouillé sur la borne 7 un fois acquise l'autorisation de déverrouillage.

Les contacts électriques 34 peuvent notamment se présenter sous forme de broches faisant saillie hors de l'embase 29 et adaptées pour venir en contact respectivement avec les contacts électrique 19 de l'organe de verrouillage lorsque le cycle est verrouillé sur la borne de verrouillage 7. Les contacts électriques 34 peuvent par exemple être sensiblement alignés verticalement entre eux ; ils sont isolés électriquement les uns des autres par exemple par le boîtier de l'embase 29a, qui peut être réalisé en matériau électriquement isolant.

Par ailleurs, l'embase 29 comporte également un organe d'accrochage 37 tel que par exemple un crochet monté pivotant autour d'un axe vertical Z et doté d'un bec 38 faisant saillie par rapport à l'embase 29a. Le crochet 37 est sollicité élastiquement vers une positon de repos dans laquelle le bec 38 fait saillie par rapport à l'embase 29, de façon que lorsque l'organe de verrouillage 10 est engagé dans la gâche 8 dans la direction d'engagement E, le bec 38 soit repoussé jusque dans une position escamotée par coopération entre une surface inclinée 38a du bec 38 et le bord avant de la plaque 10a, puis ledit bec 38 s'engage dans l'évidemment 15 de la plaque 10a en retenant alors ladite plaque par coopération entre un bord d'arrêt 38b appartenant au bec et le bord extérieur 17 de l'évidemment 15.

Dans cette position, le moyeu 13 de l'organe de verrouillage est de préférence en contact avec le bord d'extrémité 27b de l'ouverture échancrée 9 du couvercle 28a, de façon que le cycle 1 soit alors verrouillé sur la borne de verrouillage 7 avec un faible jeu. Les positions relatives du bec 38 et des contacts 34-36 relativement à l'organe de verrouillage 10 sont représentées en traits mixtes sur la figure 7, dans la position de verrouillage du cycle 1 sur la borne de verrouillage 7.

L'organe d'accrochage 37 peut en outre être déplacé jusqu'à une position escamotée par l'électro-aimant 33, pour permettre d'enlever le cycle 1 de la borne de verrouillage 7.

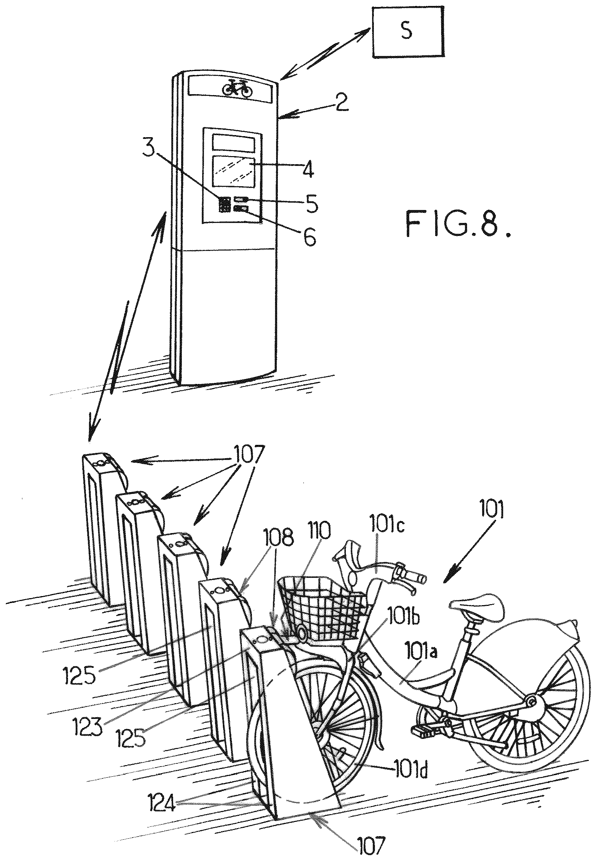

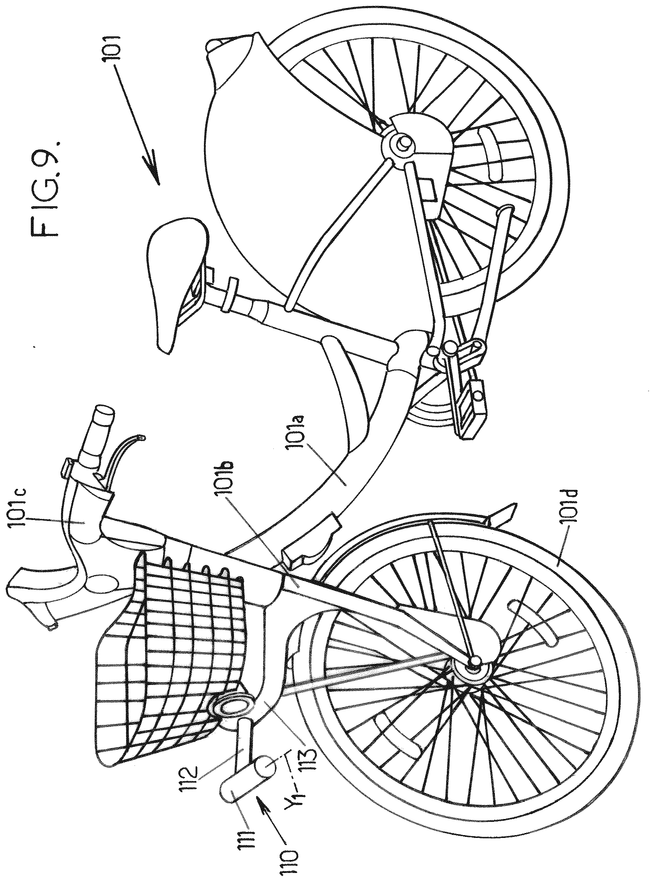

Comme représenté sur les figures 8 et 9, l'organe de verrouillage 10 est sollicité élastiquement vers une position de repos par un ressort 39.

Chaque borne de verrouillage 7 est autonome et n'est donc reliée ni à l'extérieur par aucun câble d'alimentation électrique et par aucun câble courant faible de transmission de données, ce qui facilite grandement l'installation des bornes 7.

La borne interactive 2, quant à elle, peut comporter une unité centrale électronique 42 (UC) telle qu'un microprocesseur ou autre, qui communique avec :
- le clavier 3, l'écran 4, le lecteur de carte 5 et le dispositif d'impression 6 susmentionnés,
- un interface de communication sans fil 42 (COM 1) communiquant elle-même avec l'interface de communication 40 de chaque borne 7 et fonctionnant sous le même protocole de communication que celle-ci,
- une interface de communication 43 (COM 1), par exemple un MODEM GPRS ou autre, adaptée pour communiquer avec le serveur central S.

Le système qui vient d'être décrit fonctionne comme suit.

Lorsqu'un utilisateur veut emprunter un cycle 1 sur l'une des bornes de verrouillage 7, il peut par exemple insérer une carte électronique portative dans le lecteur 5 de la borne interactive 2 puis rentrer un code secret au moyen du clavier 3, de façon à s'identifier auprès de ladite borne interactive. Après avoir vérifié les droits de l'utilisateur avec le serveur S, la borne interactive 2 donne une autorisation de verrouillage à l'une des bornes de verrouillage 7, de façon qu'un utilisateur puisse déverrouiller le cycle 1 en place sur cette borne en appuyant sur le bouton 7c susmentionné. L'utilisateur peut alors prendre le cycle 1, et l'unité centrale électronique 31 du cycle repère alors l'enlèvement du cycle 1 puisqu'elle ne peut plus communiquer avec l'unité centrale électronique 23 de ce cycle. L'unité centrale électronique 31 de la borne de verrouillage 7 informe alors la borne interactive 2 de cet enlèvement.

Lorsque l'utilisateur rend le cycle 1 et le met en place sur une borne de verrouillage 7, il engage l'organe de verrouillage 10 dans la gâche 8 de la borne de verrouillage. Au cours de ce mouvement, l'organe de verrouillage 10 pivote autour de l'axe de pivotement X1, en étant guidé par les guides 217a de la gâche 8, de façon que l'évidement 15 dudit organe de verrouillage se trouve parfaitement en correspondance avec le bec 38 de l'organe d'accrochage et de façon que les contacts électriques 19 du cycle se trouvent parfaitement en correspondance avec les contacts électriques 34 de la gâche. L'unité centrale électronique 31 de la borne de verrouillage peut alors communiquer avec l'unité centrale électronique 23 du cycle par l'intermédiaire d'au moins certains des contacts 19 et 34 de façon à identifier le cycle et à informer la borne interactive 2 du fait que le cycle a été rendu.

De plus, le circuit d'alimentation électrique 22 de du cycle 1 alimente alors le circuit d'alimentation 30 la borne de verrouillage 7 par l'intermédiaire d'au moins certains des contacts 19, 34, et les deux circuits sont conçus pour que la batterie 25 du cycle, précédemment chargée par la dynamo 26 du cycle, puisse ainsi recharger la batterie 36 de la borne 7. Les circuits d'alimentation électrique 24, 32 du cycle et de la structure d'accueil sont adaptés pour permettre un rechargement de la batterie 36 de la structure d'accueil par la batterie 25 du cycle tant que le dispositif de stockage d'énergie électrique du cycle présente une charge supérieure à un niveau de charge minimum non nul, par exemple au moins 10 % de sa charge nominale (autrement dit, on évite de décharger totalement la batterie 25 du cycle en rechargeant la batterie 36). On notera que l'on peut soit :
- utiliser des contacts 19, 34 différents pour d'une part, échanger des informations entre les unités centrales 24, 31 du cycle et de la borne, et d'autre part, recharger la batterie 36 de la borne,
- soit utiliser les mêmes contacts 19, 34 pour ces deux fonctions, les signaux d'échange d'informations entre les unités centrales étant alors par exemple séparés par exemple par filtrage.

On notera qu'en variante, la transmission de données entre les unités centrales 23, 31 pourrait se faire par liaison sans fil (par exemple par une liaison radio très courte portée, notamment une liaison RFID) dans tous les modes de réalisation de l'invention, seule l'alimentation de la structure d'accueil de cycle passant alors par les contacts électriques du cycle et de la structure d'accueil.

Selon une autre variante, la batterie 25 du cycle et/ou la batterie 36 de la structure d'accueil pourrait être remplacée par tout autre dispositif de stockage d'énergie électrique, par exemple des supercondensateurs ou autres. De plus, la batterie 36 ou autre dispositif de stockage d'énergie électrique de la structure d'accueil pourrait éventuellement être supprimée, auquel cas la structure d'accueil 7 serait alimentée en énergie électrique par la batterie 25 ou autre dispositif de stockage d'énergie du cycle, uniquement lorsque le cycle est verrouillé sur la structure d'accueil 7.

Toutes les variantes susmentionnées sont utilisables non seulement dans la première forme de réalisation décrite ci-dessus, mais également dans toutes les autres formes de réalisation décrites ci-après.

### Deuxième forme de réalisation

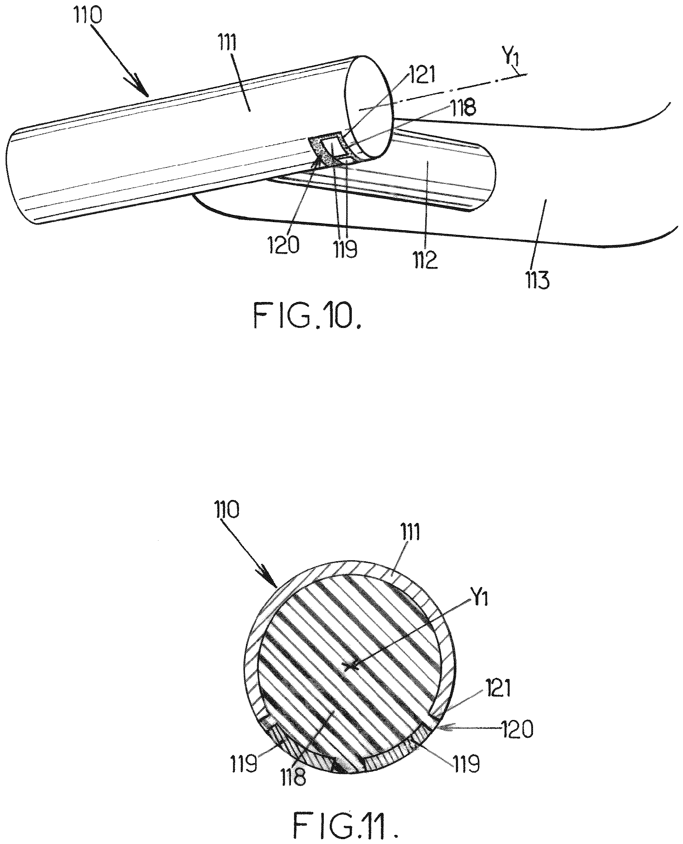

Dans la deuxième forme de réalisation de l'invention, représentée sur les figures 8 à 21, l'architecture générale et le principe de fonctionnement du système automatique de stockage de cycles sont similaires à ceux décrits précédemment en regard de la première forme de réalisation et ne seront donc pas décrits à nouveau en détail ici.

Dans cette deuxième forme de réalisation, le système automatique de stockage de cycles peut, comme précédemment, comporter un serveur central S communiquant avec des postes centraux 2 de station de stockage tels que décrits précédemment, communiquant chacun par liaison sans fil, notamment par une liaison radio courte portée du type de celles décrites ci-dessus, avec une pluralité de structure d'accueil de cycles 107, constituées ici par des bornes de verrouillage.

Les cycles 101 du système automatique de stockage de cycles peuvent être notamment des bicyclettes comportant un cadre 101a et une fourche avant 101b solidaires du guidon 101c et pourtant la roue avant 101d du cycle, comme on peut le voir plus en détail sur la figure 9.

Comme représenté sur les figures 9 à 11, la fourche avant 101c du cycle est solidaire d'un organe de verrouillage 110, par exemple métallique, qui peut présenter une forme générale de T. Cet organe de verrouillage 110 peut par exemple comporter une barre transversale rigide 111 qui s'étend longitudinalement selon un axe Y1 horizontal et perpendiculaire à la direction d'avancement du cycle dans la position normale d'utilisation du cycle. La barre transversale 111 peut présenter une section sensiblement circulaire centrée sur l'axe Y1, et elle est solidaire d'un organe de liaison rigide 112, par exemple une tige métallique qui s'étend sensiblement horizontalement vers l'avant à partir d'un support rigide 113 solidaire de la fourche avant 101c du cycle. L'organe de verrouillage 110 comporte des contacts électriques 119 réalisés en matériau électriquement conducteur. Dans l'exemple réalisé ici, ces contacts peuvent notamment être au nombre de deux, et ils peuvent être par exemple formés au voisinage d'une des extrémités de la barre transversale 111.

Plus particulièrement, les contacts électriques 119 peuvent être réalisés en partie inférieure de la barre transversale 111. Cette barre transversale 111 peut notamment être réalisée sous la forme d'un tube métallique doté d'une découpe 121 au voisinage d'une de ses extrémités axiales et les contacts électriques 119 peuvent être disposés dans cette découpe 121. Les contacts électriques 119 peuvent être portés par une matrice isolante 118 réalisé par exemple en matière plastique, laquelle matrice isolante peut être par exemple moulée ou emboîtée à l'intérieur de la barre transversale tubulaire 111.

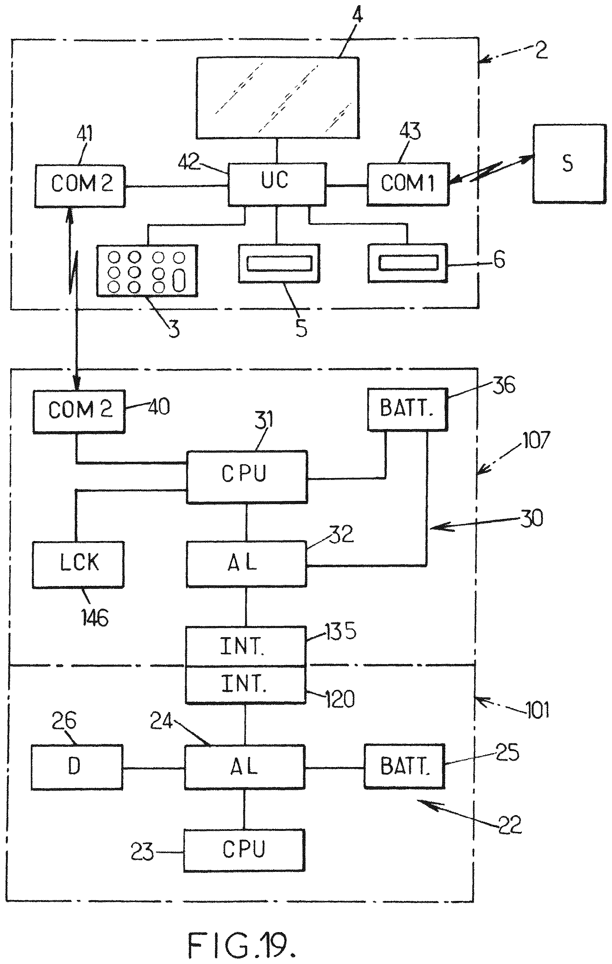

Les contacts électriques 119 sont reliés au circuit électrique 22 du cycle de la même façon que les contacts électriques 19 de la première forme de réalisation décrite précédemment et ce circuit électrique est similaire à celui décrit précédemment, comme représenté sur la figure 19.

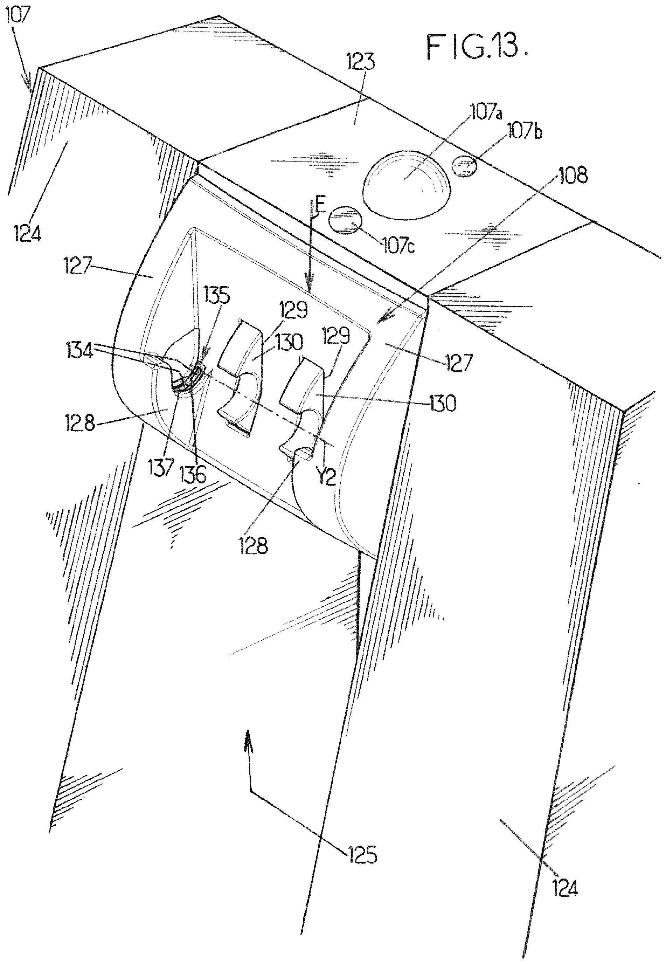

Comme représenté sur les figures 8 et 13, chaque borne de verrouillage 107 comporte une gâche 108 ouverte vers le haut, qui est adaptée pour recevoir la barre transversale 111 de l'organe de verrouillage 110 d'un cycle, par engagement dans une direction d'engagement E sensiblement verticale.

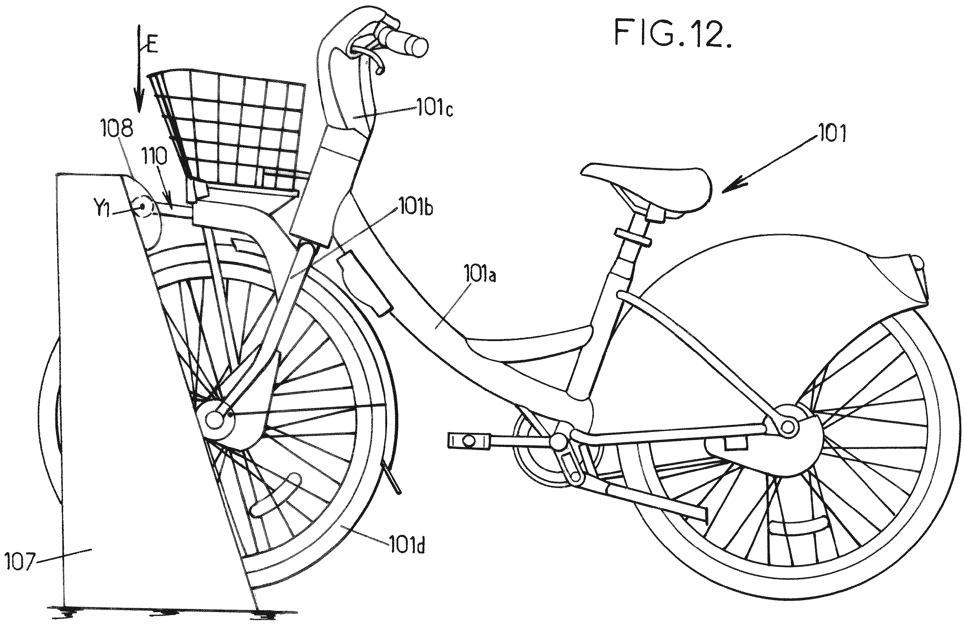

La gâche 108 peut par exemple se présenter sous la forme d'un boîtier métallique rigide 122 qui forme la face avant d'une partie supérieure transversale 123 de la borne 107, laquelle partie supérieure transversale s'étend horizontalement entre deux montants latéraux verticaux 124 fixés au sol. Ces montants 124 définissent entre eux une fente verticale 125 s'étendant vers le bas jusqu'au niveau du sol et adaptée pour recevoir la roue avant 101d d'un cycle 101 verrouillé sur la borne de verrouillage 107, comme on peut le voir sur les figures 8 et 12. La fente 125 peut par exemple présenter une largeur comprise entre 7 et 12 cm.

La borne 107 peut éventuellement comporter comme la borne 7, divers accessoires prévus par exemple sur sa face supérieure, par exemple un lecteur de carte sans contact 107a, un voyant 107b et un bouton de commande 107c pouvant servir par exemple à déclencher le déverrouillage d'un cycle 101 verrouillé sur la borne 107 une fois acquise l'autorisation de déverrouillage.

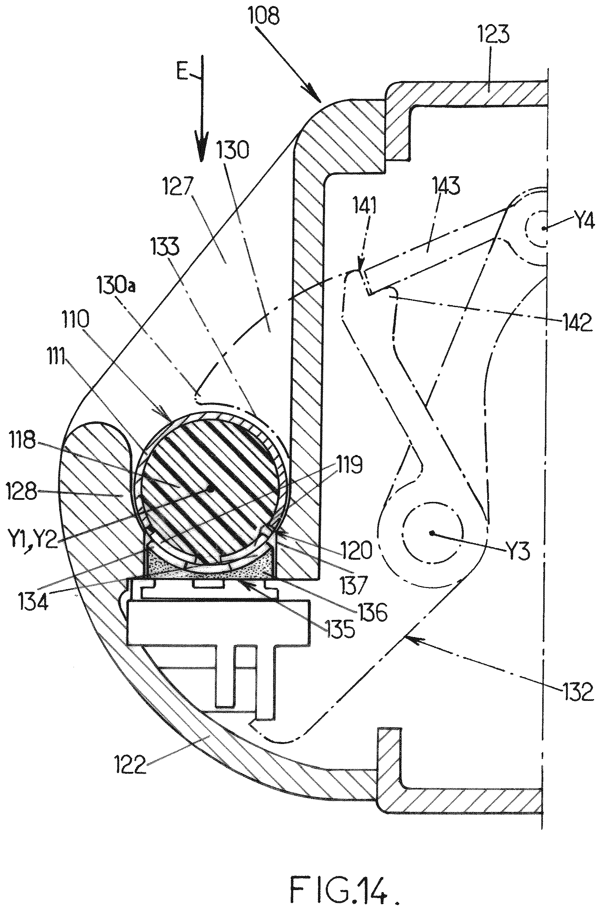

Comme représenté sur les figures 13 et 14, le boîtier 122 de la gâche 108 peut par exemple présenter une paroi frontale 126 sensiblement verticale qui, lorsque l'organe de verrouillage 110 du cycle est engagé dans la gâche 108, est parallèle à l'axe Y1 de la barre transversale 111. Cette paroi frontale 126 est encadrée par deux parois latérales 127 faisant saillie vers l'avant de la borne de verrouillage 107, c'est-à-dire vers le cycle 101 lorsqu'il est verrouillé sur ladite borne de verrouillage. Ces deux parois latérales 127 s'étendent sensiblement verticalement et sensiblement perpendiculairement à la paroi frontale 126, et elles sont écartées l'une de l'autre d'une distance correspondant sensiblement à la longueur horizontale de la barre transversale 111, de façon à ce que la gâche 108 puisse recevoir ladite barre transversale 111 entre les deux parois latérales 127, sensiblement sans jeu ou avec un faible jeu.

Chaque paroi latérale 127 comporte en outre, dans sa partie inférieure, une auge de réception 128, ouverte vers le haut, qui forme, avec la paroi frontale 126, une section sensiblement en forme de J. Les deux auges de réception 128 sont adaptées pour recevoir les deux extrémités axiales de la barre transversale 111 de l'organe de verrouillage du cycle, par engagement vertical vers le bas dans la direction E.

De plus, la gâche 108 comporte des contacts électriques 134 en matériau électriquement conducteur, qui sont par exemple au nombre de deux et qui forment ensemble une interface électrique 135. Ces contacts électriques 134 peuvent être par exemple noyés dans une matrice de matériaux isolants 136, par exemple en matière plastique, et sont reliés au circuit électrique 30 de la borne de verrouillage 107, représenté sur la figure 19, qui est identique ou similaire au circuit électrique précédemment décrit pour la première forme de réalisation de l'invention.

Dans l'exemple considéré ici, l'interface électrique 135 est disposée dans une découpe 137 ouverte vers le haut, ménagé dans le fond d'une des auges de réception 128, et les contacts électriques 134 sont disposés pour que les contacts électriques 119 de l'organe de verrouillage du cycle viennent en appui respectivement contre les différents contacts électriques 134 de la borne de verrouillage 107. Avantageusement, le fond des auges de réception 128 présente une forme circulaire centrée sur un axe Y2 horizontal qui, lorsque le cycle est verrouillé sur la borne de verrouillage 107, coïncide avec l'axe Y1 de la barre transversale 111. De plus, les contacts 134 sont également disposés selon un contour circulaire centré sur l'axe Y2, de sorte que les contacts électriques 119, 134 n'interfèrent pas avec un éventuel mouvement de rotation de la barre transversale 111 autour de l'axe Y1, Y2 lorsque le cycle est verrouillé sur la borne de verrouillage 107.

Avantageusement, les contacts électriques 119, 134 sont conformés pour être en contact mutuel sur une certaine plage angulaire de positions relatives entre la barre transversale 111 et la gâche 108 (par exemple une plage de 10 à 20 degrés), en permettant ainsi de conserver la liaison électrique entre le cycle 101 et la borne de verrouillage 107 même si la barre transversale 111 de l'organe de verrouillage du cycle n'est pas dans une position angulaire nominale par rapport à la borne 107.

Par ailleurs, comme on peut le voir sur la figure 13, la paroi frontale 126 du boîtier de la gâche 108 peut présenter par exemple deux fentes verticales 129 au travers desquelles font saillie deux plaques de verrou 130 qui font saillie vers l'avant de la borne de verrouillage 107, c'est-à-dire vers le cycle 101, parallèlement aux deux parois latérales 127.

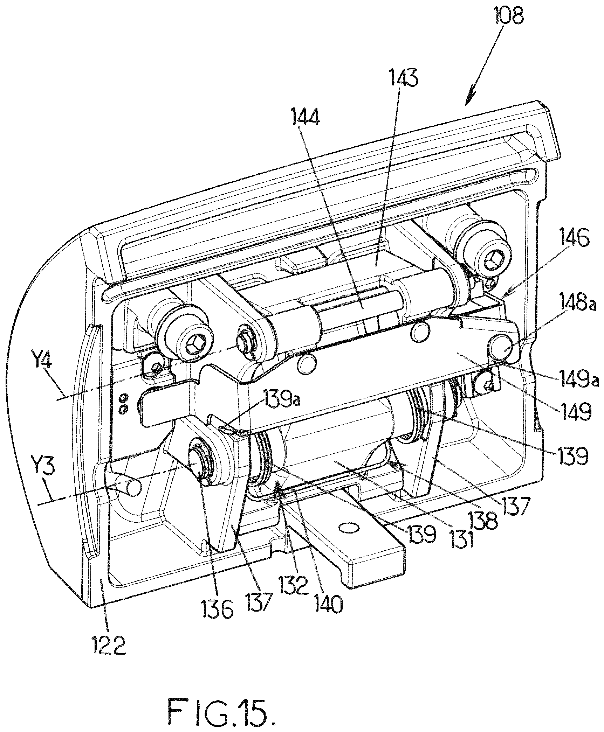

Comme représenté sur les figures 15 à 18, les deux plaques de verrou 130 peuvent être des pièces métalliques qui sont reliées entre elles à l'arrière de la paroi frontale 126 par une paroi arrière transversale 131, de façon à former ensemble, avec cette paroi arrière, une pièce de verrou monobloc rigide 132. Chacune des plaques de verrou 130 présente en outre, dans sa partie avant faisant saillie hors de fentes 129 de la paroi frontale 126, des échancrures 133 en arc de cercle qui peuvent s'étendre chacune sur environ 180 degrés et qui présentent un diamètre correspondant sensiblement au diamètre extérieur de la barre transversale 111 du cycle, de façon à pouvoir recevoir la barre transversale comme il sera expliqué ci-après.

Chacune des plaques de verrous 130 forme, de part et d'autre de l'échancrure 133 correspondante, un bec supérieur et un bec inférieur qui constituent respectivement un organe de blocage 130a et un organe d'actionnement 130b. Dans la position de verrouillage de la pièce de verrou 132, les échancrures 133 sont orientées sensiblement horizontalement vers l'avant de sorte que la barre transversale 111 engagée dans ces échancrures 133 est bloquées dans les auges de réception 128 et empêchée de sortir de ces auges de réception par les organes de blocage 130a des deux plaques de verrous (voir la figure 14).

Les échancrures 133 forment avec les auges de réception 128 un contour intérieur en arc de cercle centré sur l'axe Y2, qui permet à la barre transversale 111 de tourner librement autour de son axe Y1, comme mentionné ci-dessus. De plus, le cadre 101a du cycle 101 peut librement pivoter autour de l'axe vertical du guidon 101c, de sorte que le cycle ne peut pas aisément être cassé ou désolidarisé de la borne 107 par vandalisme : le cadre 101a du cycle ne peut pas être utilisé par des vandales comme un bras de levier permettant d'exercer une force importante sur le verrouillage du cycle 101 à la borne 107.

Enfin, la protection du cycle 101 pendant le stockage est encore renforcée par le fait que la borne 107 protège au moins partiellement la roue avant 101d du cycle.

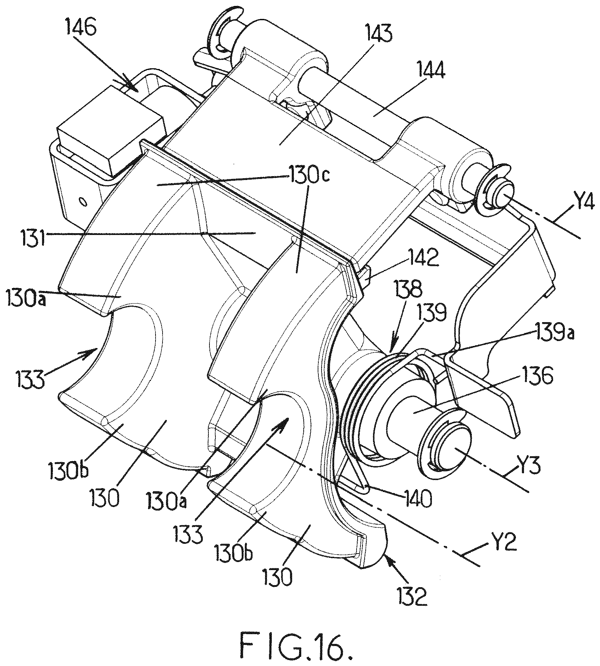

La pièce de verrou 132 est montée pivotante autour d'un axe de rotation Y3 parallèle à l'axe Y2 susmentionné, par exemple au moyen d'une tige de pivot 136 montée tourbillonnante sur deux flasques verticaux parallèles 137 (voir la figure 15) s'étendant perpendiculairement vers l'arrière à partir de la paroi frontale 126 du boîtier 122. Dans l'exemple considéré ici, la pièce de verrou 132 est en outre sollicitée vers le haut, en direction d'une position de déverrouillage qui sera décrite ci-après, au moyen d'un ressort 138. Le ressort 138 peut par exemple être un ressort en fil métallique comprenant deux enroulements 139 enroulés autour de l'axe Y3 de part et d'autre de la paroi arrière de la paroi 131 de la pièce de verrou, chacun de ces enroulements étant prolongé d'une part, par une branche d'extrémité 139a (figures 15 et 16) qui prend appui sur le flasque 137 correspondant et d'autre part, par une partie centrale 140 du fil métallique élastique en forme d'étrier, prenant appui en partie inférieure de la paroi arrière 131.

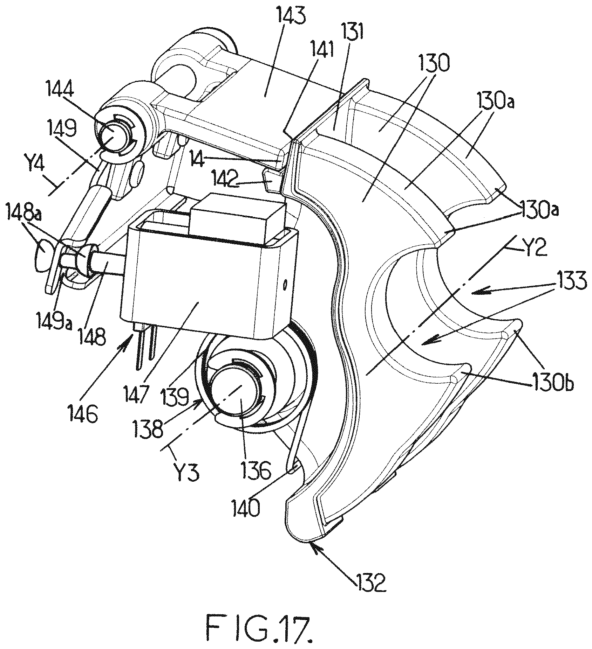

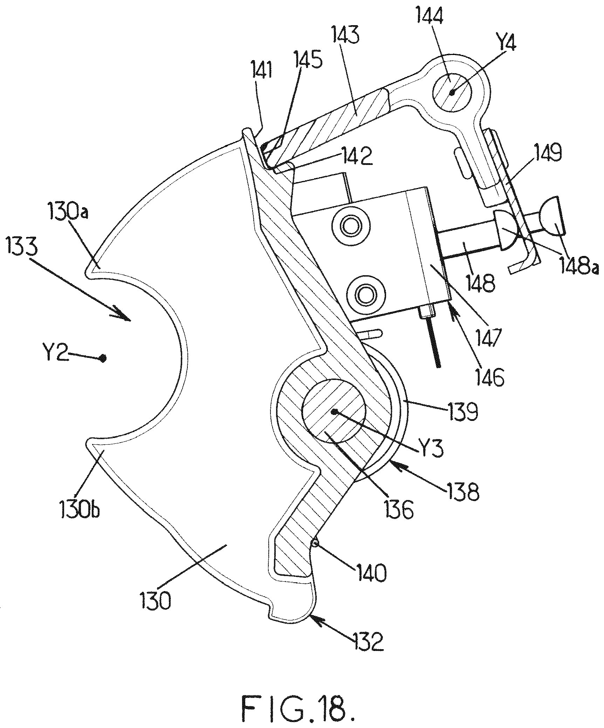

La paroi arrière 131 de la pièce de verrou comporte en outre, dans sa partie supérieure, une zone de butée 141, qui est orientée vers l'arrière et qui est délimitée vers le bas par un épaulement 142 orienté vers le haut appartenant également à ladite paroi arrière 131 (voir les figures 17 et 18).

Outre la pièce de verrou 132, le verrou électrique comporte en outre :
- une gâchette 143 qui se présente sous la forme d'une plaque métallique rigide montée pivotante par rapport à la borne 107 autour d'un axe Y4 parallèle aux axes Y2 et Y3, par exemple au moyen d'une tige pivot 144 tourbillonnant dans les flasques 137 susmentionnées, cette gâchette s'étendant sensiblement vers l'avant jusqu'à une extrémité avant 145 qui est adaptée pour venir buter contre la butée arrière 141 de la pièce de verrou de façon à maintenir ladite pièce de verrou dans le position de verrouillage décrite précédemment, malgré la sollicitation élastique du ressort 138,
- et un actionneur électrique 146, par exemple un actionneur à solénoïde qui comporte un corps 147 et une tige d'actionnement 148 coulissant longitudinalement dans le corps 147, cette tige d'actionnement 148 étant reliée, par exemple par l'intermédiaire d'un levier en tôle 149, à la gâchette 143. A titre d'exemple, l'extrémité distale de la tige d'actionnement 148 peut être engagée dans une fente 149 a du levier 149 et comporter deux butées 148a disposées de part et d'autre de la plaque de tôle formant ce levier 149.

La tige d'actionnement 148 est normalement sollicitée élastiquement vers l'arrière, c'est-à-dire dans la position d'extension de la tige 148, au moyen d'un ressort interne (non représenté) logé dans le corps 146, de façon à solliciter la gâchette 143 vers sa position de butée où l'extrémité avant 145 de la gâchette 143 bute contre la butée 141 de la pièce de verrou. De plus, le corps 147 de l'actionneur 146 comporte un solénoïde qui, lorsqu'il est parcouru par un courant électrique, tire la tige d'actionnement 148 dans une position rétractée qui fait pivoter la gâchette 143 dans une position escamotée où ladite gâchette 143 se trouve au-dessus de la butée 141 de la pièce de verrou, ce qui permet à ladite pièce de verrou 132 de pivoter vers l'arrière autour de l'axe de rotation Y3 de façon que les échancrures 133 des plaques de verrou 130 soit orientée sensiblement vers le haut, en position de déverrouillage.

Lors du passage en position de déverrouillage, l'alimentation électrique de l'actionneur électrique 146 est brève, par exemple moins de dix secondes et avantageusement moins de cinq secondes, puisqu'elle a simplement pour but que la gâchette 143 n'interfère plus avec la butée 141 de la pièce de verrou au début du mouvement de pivotement vers l'arrière de ladite pièce de verrou : une fois ce pivotement initié, l'alimentation électrique de l'actionneur 146 peut être arrêtée, après quoi la gâchette 143 est à nouveau sollicitée vers le bas, et ladite gâchette vient alors simplement en appui contre la surface supérieure circulaire 130a des plaques de verrou 130 sans gêner le pivotement de la pièce de verrou 132.

La consommation électrique de l'actionneur 146 est donc très faible.

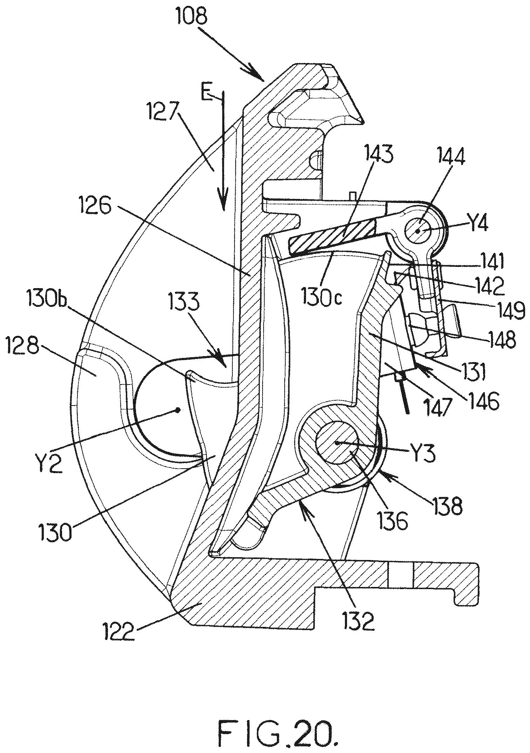

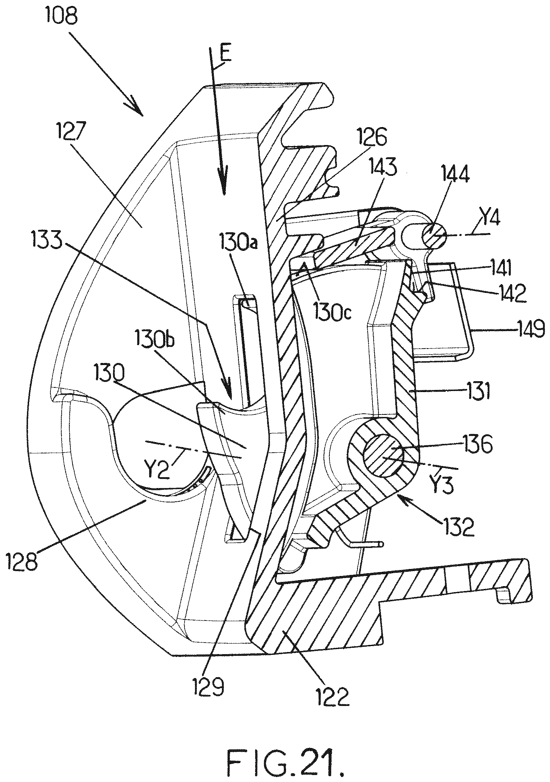

Dans cette position de déverrouillage, qui est bien visibles sur les figures 20 et 21, les organes de blocage 130a des plaques de verrou 130 sont escamotés à l'arrière de la paroi frontale 126 et seuls les organes d'actionnement 130b des plaques de verrou font saillie vers l'avant, de sorte que la barre transversale 111 d'un cycle peut alors librement être enlevé de la gâche 108 en libérant ainsi le cycle 101 correspondant ou, au contraire, engagé dans la gâche 108 verticalement vers le bas dans la direction d'engagement E. Dans ce cas, la barre transversale 111 du cycle que l'on vient verrouiller sur la borne de verrouillage 107 appuie verticalement vers le bas sur les organes d'actionnement 130b des plaques de verrou, ce qui fait pivoter la pièce de verrou 132 vers le bas contre la sollicitation élastique du ressort 138, jusqu'à ce que la gâchette 143 puisse s'engager derrière la butée 141 de la pièce de verrou en appui sur l'épaulement 142 de ladite pièce de verrou, après quoi la pièce de verrou se trouve à nouveau en position de verrouillage comme représenté sur les figures 13 à 18.

Le mode de fonctionnement du système des figures 8 à 21 est par ailleurs similaire à celui des figures 1 à 7, et ne sera donc pas réexpliqué ici, les contacts 19, 34 de la première forme de réalisation étant remplacés par les contacts 119, 134 pour alimenter la batterie 36 des bornes 107 et faire communiquer les unités centrales 31 desdites bornes 107 avec les unités centrales 23 des cycles 101.

### Troisième forme de réalisation

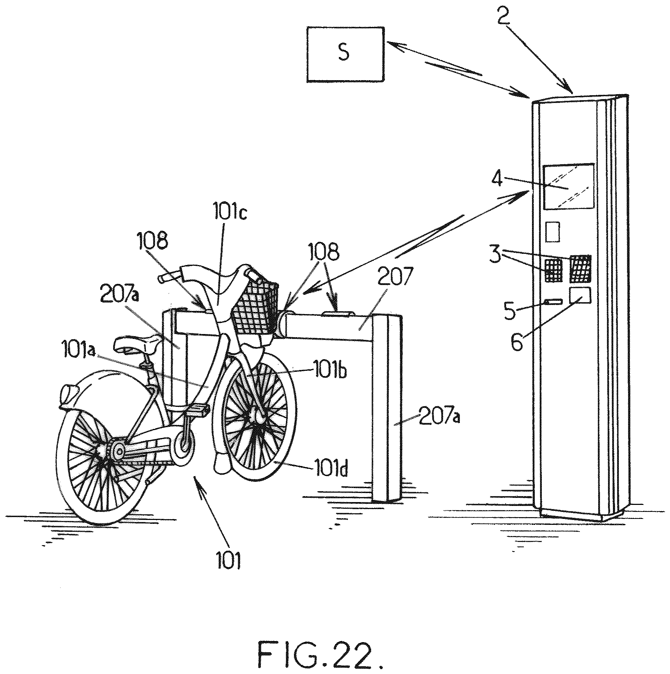

La troisième forme de réalisation de l'invention, représentée sur la figure 22, se différencie de la deuxième forme de réalisation uniquement par le fait que la structure d'accueil 207 est ici une poutre horizontale métallique qui est fixée au sol par des montants latéraux 207a, cette poutre incluant plusieurs postes de verrouillages de cycles correspondant à plusieurs gâches 108 identiques ou similaires à celles déjà décrites ci-dessus, fixées sur une des faces verticales ou sur les deux faces verticales de la poutre 207.

Dans ce cas, chaque station de stockage de cycles peut comporter une seule ou plusieurs structures d'accueil 207.

On notera que dans la troisième forme de réalisation, le circuit électrique 30 peut être soit reproduit pour chaque gâche 108, soit certains éléments du circuit électrique 30 peuvent être communs à toutes les gâches 108, notamment l'unité centrale électronique 31, au moins une partie du circuit d'alimentation électrique 32, la batterie 36 et l'interface de communication 40.

### Quatrième forme de réalisation

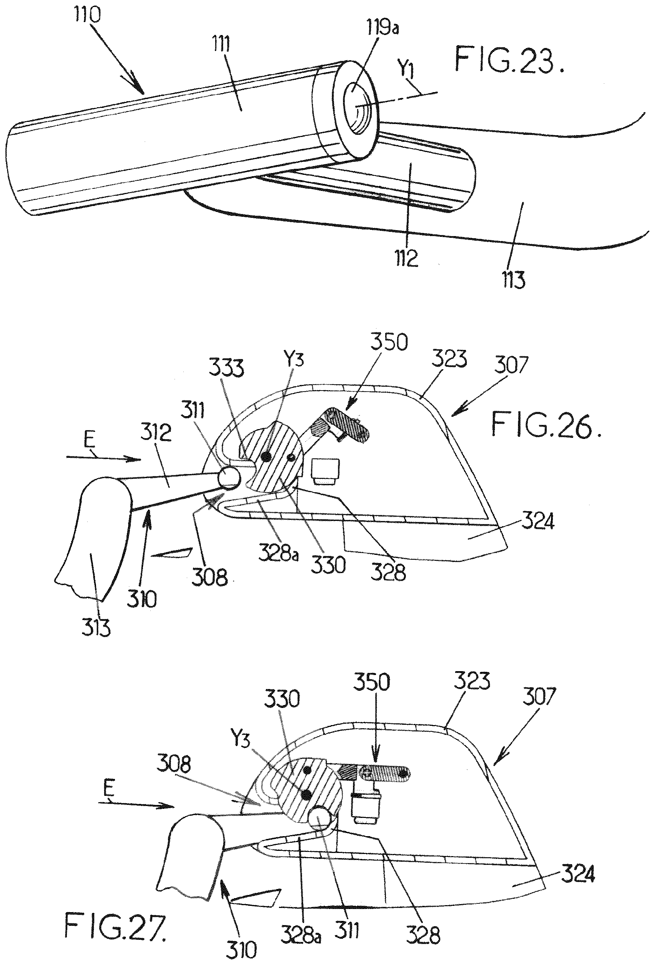

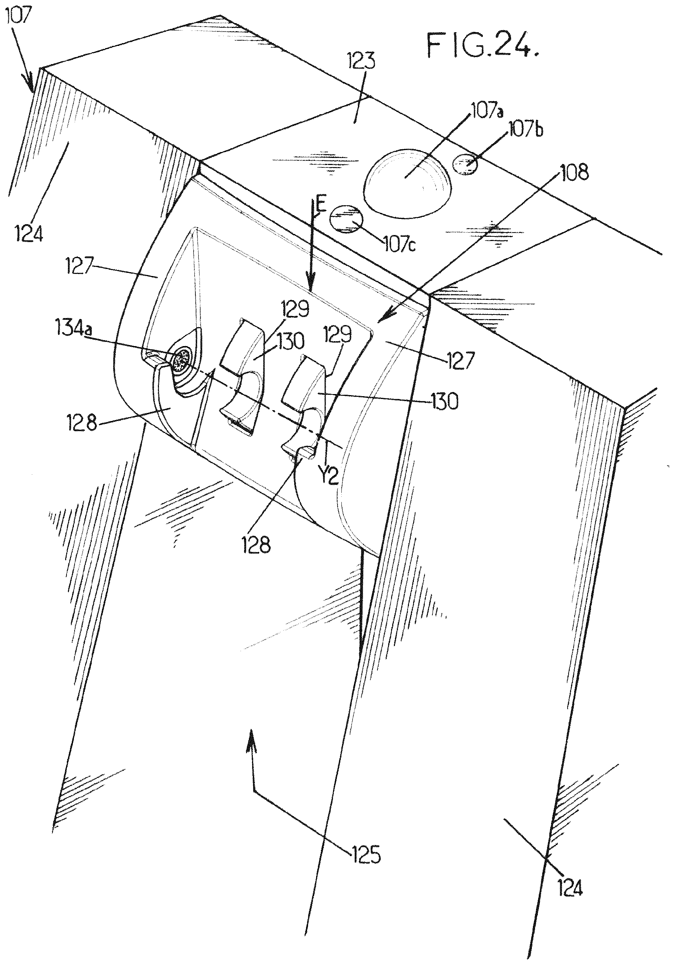

La quatrième forme de réalisation de l'invention, représentée sur les figures 23 et 24, se différencie de la deuxième forme de réalisation uniquement par le fait que :
- les contacts électriques 119 sont remplacés par des contacts électriques latéraux 119a, se présentant par exemple sous la forme de deux billes métalliques 119a qui sont disposées respectivement aux deux extrémités axiales de la barre transversale 111 et qui sont sollicitées élastiquement vers l'extérieur selon l'axe Y1 de façon à faire saillie légèrement vers l'extérieur,
- et les contacts électriques 134 de la structure d'accueil sont remplacés par deux contacts latéraux 134a qui sont formés respectivement dans les faces intérieures des deux parois latérales 127 en alignement avec l'axe Y2, de façon que les contacts électriques 119a du cycle viennent en appui respectif sur les contacts électriques 134a de la structure d'accueil.

### Cinquième forme de réalisation

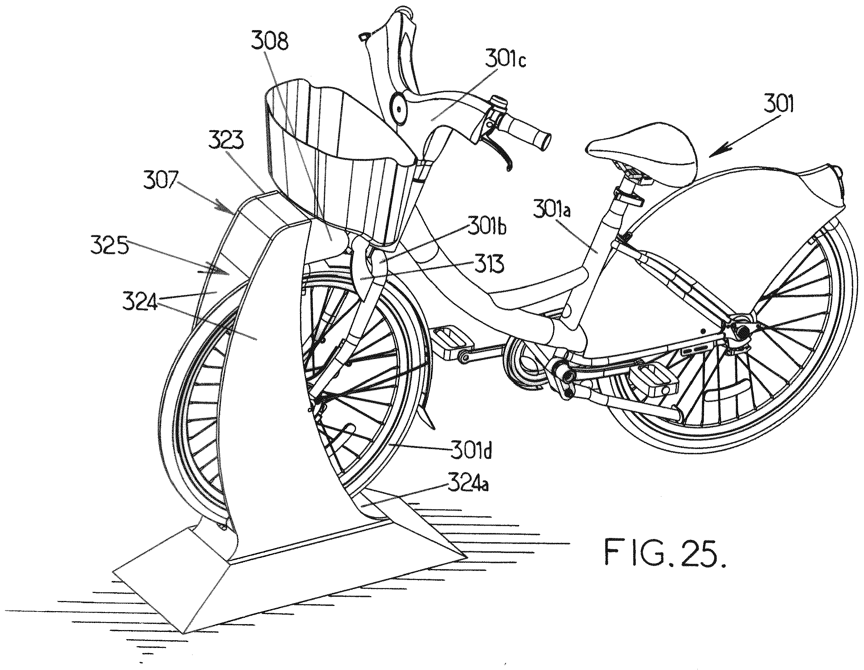

Dans la cinquième forme de réalisation de l'invention, représentée sur la figure 25, la structure et le fonctionnement du système automatique de stockage de cycle sont similaires à ceux décrits précédemment et ne seront donc pas décrits à nouveau en détail ici.

Dans cette cinquième forme de réalisation de l'invention, les cycles 301 sont similaires aux cycles 101 précédemment décrits, avec un cadre 301a qui porte une fourche avant 301b solidaire du guidon 301c et portant la roue avant 301d, la fourche avant 301b étant solidaire de supports rigides 313 se présentant par exemple sous la forme de deux flasques latéraux qui s'étendent parallèlement l'un à l'autre vers l'avant et vers le haut à partir des deux branches de la fourche 301b. Comme représenté plus en détail sur les figures 26 et 27, ces flasques latéraux 313 portent un organe de verrouillage 310 en forme générale de T, comprenant une barre transversale rigide 311, similaire à la barre transversale rigide 111, précédemment décrite, et un organe de liaison rigide 312 qui s'étend vers l'avant à partir des flasques 313. Les cycles 301 peuvent se verrouiller sur des structures d'accueil de cycle 307, constituées ici par des bornes de verrouillage, dont l'une est représentée sur la figure 25.

Cette borne de verrouillage 307 présente une structure générale similaire à la borne de verrouillage 107 précédemment décrite dans la deuxième forme de réalisation, avec une partie supérieure transversale 123 qui porte une gâche 308 adaptée pour recevoir et verrouiller l'organe de verrouillage 310 du cycle, cette partie supérieure transversale 323 s'étendant horizontalement entre deux montants latéraux verticaux 124 solidaires d'une embase 324a elle-même fixée au sol. L'embase 324a peut être prévue pour que la roue avant 301d du cycle repose sur ladite embase lorsque le cycle est verrouillé sur la borne de verrouillage 307, ce qui permet de bien maîtriser la hauteur de l'organe de verrouillage 310 du cycle par rapport à la gâche 308.

Comme représenté sur la figure 26, la gâche 308 peut le cas échéant être ouverte horizontalement selon une direction d'engagement E, et ladite gâche 308 peut comporter, au niveau de chacune des extrémités axiales de la barre transversale 311 une auge 328 ouverte horizontalement et dont la paroi inférieure 328a sert de guide pour la barre transversale 311, lorsque ladite barre transversale 311 est engagée horizontalement dans l'auge 308, comme représenté sur les figures 26 et 27.

La gâche 308 comporte en outre un verrou électrique qui peut par exemple comporter deux plaques de verrou 330 similaires aux plaques de verrou 130 précédemment décrites, comportant chacune une échancrure 333 adaptée pour recevoir la barre transversale 311. Comme représenté sur la figure 27, chaque plaque de verrou 330 est adaptée pour pivoter autour d'un axe de rotation Y3, entre une position déverrouillée où l'échancrure 333 est ouverte horizontalement vers l'embouchure de la gâche 308 pour recevoir la barre transversale 311 (figure 26) et une position verrouillée où l'échancrure 333 est orientée vers le bas, sensiblement à 90° de la position déverrouillée, en bloquant ainsi la barre transversale 333 contre la paroi inférieure 328a de l'auge 328. Le fonctionnement du verrou électrique et notamment des plaques de verrou 330 est donc identique à celui de la deuxième forme de réalisation décrite précédemment. On notera que, comme dans la deuxième forme de réalisation de l'invention, le cadre du cycle 301 peut le cas échéant être soulevé lors d'une tentative de vandalisme, sans pour autant que cette tentative ne donne lieu à une détérioration du cycle 301 ou de la borne de verrouillage 307, puisque la barre transversale 311 peut alors pivoter sur elle-même autour des axes Y1, Y2.

Les plaques de verrou 330 susmentionnées sont commandées par un mécanisme de commande 350 qui peut être similaire à celui décrit dans la deuxième forme de réalisation de l'invention, ou préférentiellement similaire à celui décrit dans le document FR-A-2 905 927.

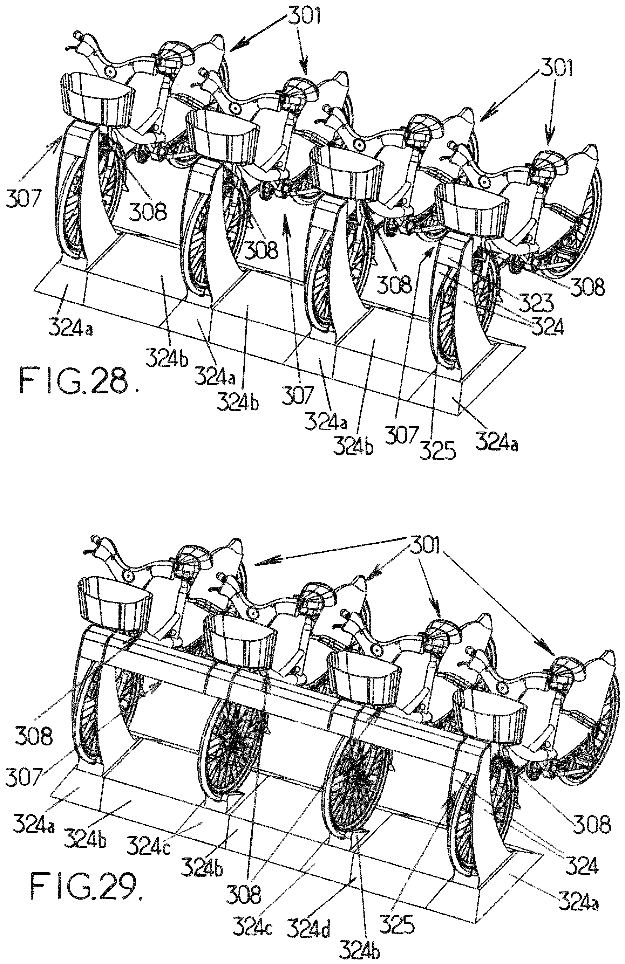

Comme représenté sur la figure 28, plusieurs bornes de verrouillage 307 d'une même station de stockage de cycles peuvent être fixées entre elles au niveau de leurs embases 324a, par des plaques de liaison 324b elles-mêmes fixées au sol. Ce type de montage peut faciliter l'installation des stations de stockage de cycles du système selon l'invention.

Eventuellement, comme représenté sur la figure 29, la structure d'accueil de cycles pourrait comporter deux bornes de verrouillage 307 reliées entre elles par une poutre transversale 307a comportant sur une ou deux de ses faces verticales, des gâches 308 telles que précédemment décrites. Dans l'exemple de la figure 29, la structure d'accueil comporte en outre des embases supplémentaires 324a, pourvues par exemple chacune d'un guide 324d pour les roues avant des cycles, en correspondance avec les gâches 308 de la poutre horizontale 307a. Les différentes embases 324a, 324c sont reliées entre elles, comme dans l'exemple de la figure 28, par des plaques de liaison 324b elles-mêmes fixés au sol.

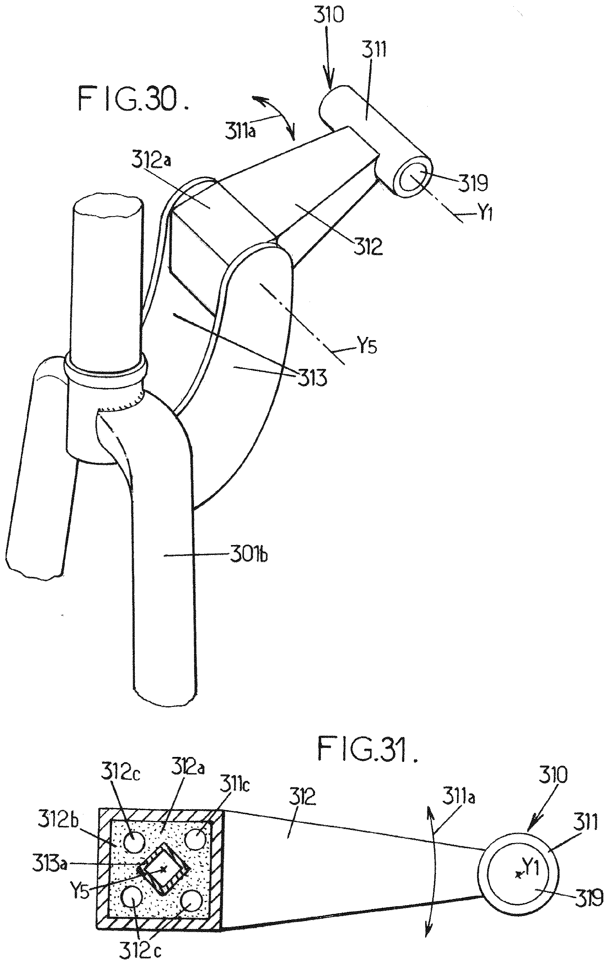

Comme représenté sur les figures 30 et 31, dans la cinquième forme de réalisation de l'invention, l'organe de verrouillage 310 du cycle peut le cas échéant être relié élastiquement aux flasques latéraux 313, de façon à pouvoir pivoter autour d'un axe horizontal Y5 parallèle à l'axe Y1, selon la direction de la double flèche 311a.

A cet effet, l'organe de verrouillage 310 peut par exemple être relié aux flasques 313 au moyen d'un manchon élastique, comprenant par exemple :
- une armature extérieure 312a, solidaire de l'organe de liaison 312 et s'étendant autour de l'axe Y5, cette armature extérieure présentant par exemple une forme tubulaire à section carrée,
- une armature intérieure 313a solidaire des flasques latéraux 313 et s'étendant selon l'axe Y5, cette armature intérieure présentant par exemple une forme tubulaire à section carrée, dont les faces par exemples décalées angulairement de 45° par rapport aux faces de l'armature extérieure 312a,
- et un corps en élastomère 312b remplissant l'espace intermédiaire entre l'armature intérieure 313a et l'armature extérieure 312a, ce corps en élastomère pouvant éventuellement comporter des alvéoles 312c pour lui donner plus de souplesse.

On notera enfin que dans toutes les forme de réalisation de l'invention, les circuits électriques respectifs du cycle et de la structure d'accueil (et notamment les batteries de ces circuits) fonctionnent sous une même tension et préférentiellement à basse tension (par exemple 3V ou 6V) de façon à être peu sensibles à la présence d'eau au niveau des contacts électriques 19, 119, 119a, 34, 134, 134a.

## Revendications

1. Système automatique de stockage de cycles comprenant :
- une pluralité de cycles (1 ; 101 ; 301) comportant chacun :
• un dispositif de stockage d'énergie électrique (25),
• des contacts électriques (19 ; 119 ; 119a),
• un circuit d'alimentation électrique (24) reliant le dispositif de stockage d'énergie électrique (25) auxdits contacts électriques (19 ; 119 ; 119a),
- une pluralité de structures d'accueil fixes (7 ; 107 ; 207 ; 307 ; 307a) sur lesquelles peuvent se verrouiller lesdits cycles (1 ; 101 ; 301) et comportant chacune :
• au moins une unité centrale électronique (31),
• un circuit d'alimentation électrique (32) relié à l'unité centrale électronique (31) de la structure d'accueil,
• des contacts électriques (34 ; 134 ; 134a) adaptés pour venir en contact mutuel avec les contacts électriques (19 ; 119 ; 119a) respectifs d'un cycle (1 ; 101 ; 301) verrouillé sur la structure d'accueil, en reliant le circuit d'alimentation électrique (24) du cycle au circuit d'alimentation électrique (32) de la structure d'accueil,
- un dispositif de commande externe (2, S) communiquant avec l'unité centrale (31) de la structure d'accueil et étant adapté pour sélectivement autoriser l'emprunt des cycles (1 ; 101 ; 301) verrouillés sur les structures d'accueil,
**caractérisé en ce que** les circuits d'alimentation électrique (24, 32) du cycle et de la structure d'accueil sont adaptés pour permettre au dispositif de stockage d'énergie électrique (25) du cycle d'alimenter électriquement le circuit d'alimentation électrique (32) de la structure d'accueil lorsque le cycle est verrouillé sur la structure d'accueil,
**et en ce que** le circuit d'alimentation électrique de la structure d'accueil n'est relié à aucune source externe d'énergie électrique autre que le dispositif de stockage d'énergie électrique (25) du cycle, et l'unité centrale électronique (31) de la structure d'accueil communique avec le dispositif de commande externe (2, S) par une liaison sans fil.

2. Système selon la revendication 1, dans lequel chaque structure d'accueil (7 ; 107 ; 207 ; 307 ; 307a) comporte un dispositif de stockage d'énergie électrique (36) relié au circuit d'alimentation électrique (32) de la structure d'accueil pour alimenter l'unité centrale électronique (31) de la structure d'accueil, les circuits d'alimentation électrique (24, 32) du cycle et de la structure d'accueil étant adaptés pour permettre au dispositif de stockage d'énergie électrique (25) du cycle de charger le dispositif de stockage d'énergie électrique (36) de la structure d'accueil lorsque le cycle est verrouillé sur la structure d'accueil.

3. Système selon l'une quelconque des revendications précédentes, dans lequel chaque cycle (1 ; 101) comporte en outre un générateur électrique (26) adapté pour charger le dispositif de stockage d'énergie électrique (25) du cycle et pour être entraîné par le roulage dudit cycle.

4. Système selon l'une quelconque des revendications précédentes, dans lequel le cycle (1 ; 101 ; 301) comporte un circuit électronique (23) relié auxdits contacts électriques (19 ; 119 ; 119a) du cycle et ladite unité centrale (31) de la structure d'accueil est adaptée pour échanger des informations avec le circuit électronique (23) du cycle par l'intermédiaire desdits contacts électriques du cycle (19 ; 119 ; 119a) et de la structure d'accueil (34 ; 134 ; 134a) lorsqu'ils sont en contact mutuel.

5. Système selon l'une quelconque des revendications précédentes, dans lequel le dispositif de commande externe comporte au moins un serveur central (S) et plusieurs postes centraux (2) de stations correspondant chacun à une station de stockage de cycles, les postes centraux de stations communiquant d'une part, avec le serveur central (S) et d'autre part, avec au moins une unité centrale électronique (31) d'une structure d'accueil (7 ; 107 ; 207 ; 307 ; 307a) appartenant à la même station de stockage de cycles.

6. Système selon l'une quelconque des revendications précédentes, dans lequel chaque cycle (1 ; 101 ; 301) comporte un organe de verrouillage (10 ; 110 ; 310) et chaque structure d'accueil (7 ; 107 ; 207 ; 307 ; 307a) comporte au moins un verrou électrique (33, 37 ; 132, 143, 146 ; 330, 350) commandé par l'unité centrale électronique (31) de la structure d'accueil et adapté pour retenir l'organe de verrouillage (10 ; 110 ; 310) de l'un des cycles en verrouillant ainsi ledit cycle sur la structure d'accueil, ledit verrou électrique étant alimenté électriquement par le dispositif de stockage d'énergie électrique (36) de la structure d'accueil.

7. Système selon la revendication 6, dans lequel chaque structure d'accueil comporte au moins un poste de verrouillage adapté pour recevoir un cycle et incluant :
- une gâche (8 ; 108 ; 308) ouverte selon une direction d'engagement (E) et adaptée pour recevoir l'organe de verrouillage (10 ; 110 ; 310) d'un cycle par emboîtement selon ladite direction d'engagement (E),
- et ledit verrou électrique, comportant un organe de blocage (38 ; 130a) mobile entre d'une part, une position de verrouillage où ledit organe de blocage est adapté pour bloquer l'organe de verrouillage (10 ; 110) du cycle dans la gâche et d'autre part, une position de déverrouillage où l'organe de blocage (38 ; 130a) est adapté pour permettre à l'organe de verrouillage (10 ; 110) d'entrer et sortir de la gâche.

8. Système selon la revendication 7, dans lequel l'organe de verrouillage (110 ; 310) du cycle comporte une barre transversale (111 ; 311) s'étendant selon un axe longitudinal (Y1) entre deux extrémités, la gâche (108 ; 308) comporte au moins une auge de réception (128 ; 328) ouverte dans ladite direction d'engagement (E) et adaptée pour recevoir ladite barre transversale (111 ; 311) avec son axe longitudinal (Y1) disposé sensiblement selon un axe horizontal fixe (Y2) défini par l'auge de réception (128 ; 328), et le verrou comporte au moins un organe d'actionnement (130b) qui est en liaison avec l'organe de blocage (130a), ledit organe d'actionnement (130b) étant mobile avec l'organe de blocage (130a) dans un plan vertical perpendiculaire audit axe horizontal fixe (Y2), entre :
- une première position correspondant à la position de déverrouillée du verrou, où ledit organe d'actionnement (130b) est disposé pour interférer avec la barre transversale (111 ; 311) de l'organe de verrouillage lorsque ladite barre transversale est engagée dans l'auge de réception (128) dans la direction d'engagement (E),
- et une deuxième position correspondant à la position verrouillée du verrou, ladite barre transversale (111 : 311) de l'organe de verrouillage étant adaptée pour déplacer l'organe d'actionnement (130b) de sa première à sa deuxième position lorsque ladite barre transversale (111 ; 311) est introduite dans l'auge de réception (128), et ledit organe d'actionnement (130b) étant adapté pour actionner le verrou lorsqu'il passe de sa première à sa deuxième position en déplaçant l'organe de blocage (130a)en position de verrouillage.

9. Structure d'accueil pour un système de stockage automatique de cycles selon l'une quelconque des revendications précédentes, adaptée pour verrouiller un cycle (1 ; 101 ; 301) qui comporte un dispositif de stockage d'énergie électrique, des contacts électriques, et un circuit d'alimentation électrique reliant le dispositif de stockage d'énergie électrique auxdits contacts électriques, ladite structure d'accueil comprenant :
• au moins une unité centrale électronique (31) adaptée pour communiquer avec un dispositif de commande externe (2, S) pour sélectivement autoriser l'emprunt d'un cycle verrouillé sur la structure d'accueil,
• un circuit d'alimentation électrique (32) relié à l'unité centrale électronique (31) de la structure d'accueil,
• des contacts électriques (34 ; 134 ; 134a) adaptés pour venir en contact mutuel avec les contacts électriques respectifs d'un cycle verrouillé sur la structure d'accueil, en reliant le circuit d'alimentation électrique du cycle au circuit d'alimentation électrique (32) de la structure d'accueil,
**caractérisée en ce que** le circuit d'alimentation électrique (31) de la structure d'accueil est adapté pour être alimenté électriquement par le dispositif de stockage d'énergie électrique du cycle lorsque le cycle est verrouillé sur la structure d'accueil,
**en ce que** ledit circuit d'alimentation de la structure d'accueil n'étant relié à aucune source externe d'énergie électrique autre que le dispositif de stockage d'énergie électrique du cycle,
**et en ce que** l'unité centrale électronique (31) de la structure d'accueil est reliée à une interface de communication (40) adaptée pour communiquer avec un dispositif de commande externe par une liaison sans fil.

## Patentansprüche

1. Automatisches System zur Lagerung von Fahrrädern, aufweisend:
- mehrere Fahrräder (1; 101; 301) mit jeweils
* einer elektrischen Energiespeichervorrichtung (25),
* elektrischen Kontakten (19; 119; 119a),
* einer elektrischen Versorgungsschaltung (24), die die elektrische Energiespeichervorrichtung (25) mit den elektrischen Kontakten (19; 119; 119a) verbindet,
- mehrere ortsfeste Aufnahmestrukturen (7; 107; 207; 307; 307a), an denen die Fahrräder (1; 101; 301) verriegelt werden können und die jeweils aufweisen:
* mindestens eine elektronische Zentraleinheit (31),
* eine elektrische Versorgungsschaltung (32), die mit der elektronischen Zentraleinheit (31) der Aufnahmestruktur verbunden ist,
* elektrische Kontakte (34; 134; 134a), die angepasst sind, in gegenseitigem Kontakt mit den jeweiligen elektrischen Kontakten (19; 119; 119a) eines an der Aufnahmestruktur verriegelten Fahrrads (1; 101; 301) zu kommen und dabei die elektrische Versorgungsschaltung (24) des Fahrrads mit der elektrischen Versorgungsschaltung (32) der Aufnahmestruktur zu verbinden,
- eine externe Steuervorrichtung (2, S), die mit der Zentraleinheit (31) der Aufnahmestruktur kommuniziert und angepasst ist, ein Ausleihen der an der Aufnahmestruktur verriegelten Fahrräder (1; 101; 301) selektiv zu erlauben,
**dadurch gekennzeichnet, dass** die elektrischen Versorgungsschaltungen (24, 32) des Fahrrads und der Aufnahmestruktur angepasst sind, der elektrischen Energiespeichervorrichtung (25) des Fahrrads zu erlauben, die elektrische Versorgungsschaltung (32) der Aufnahmestruktur elektrisch zu versorgen, wenn das Fahrrad an der Aufnahmestruktur verriegelt ist, und dass die elektrische Versorgungsschaltung der Aufnahmestruktur mit keiner anderen externen elektrischen Energiequelle verbunden ist als der elektrischen Energiespeichervorrichtung (25) des Fahrrads, und dass die elektronische Zentraleinheit (31) der Aufnahmestruktur über eine drahtlose Verbindung mit der externen Steuervorrichtung (2, S) kommuniziert.

2. System nach Anspruch 1, in welchem jede Aufnahmestruktur (7; 107; 207; 307; 307a) eine elektrische Energiespeichervorrichtung (36) aufweist, die mit der elektrischen Versorgungsschaltung (32) der Aufnahmestruktur (32) verbunden ist, um die elektronische Zentraleinheit (31) der Aufnahmestruktur zu versorgen, wobei die elektrischen Versorgungsschaltungen (24, 32) des Fahrrads und der Aufnahmestruktur geeignet sind, der elektrischen Energiespeichervorrichtung (25) des Fahrrads zu erlauben, die elektrische Energiespeichervorrichtung (36) der Aufnahmestruktur zu laden, wenn das Fahrrad an der Aufnahmestruktur verriegelt ist.

3. System nach einem der vorstehenden Ansprüche, in welchem jedes Fahrrad (1; 101) ferner einen elektrischen Generator (26) aufweist, der angepasst ist, die elektrische Energiespeichervorrichtung (25) des Fahrrads zu laden und durch das Rollen des Fahrrads angetrieben zu werden.

4. System nach einem der vorstehenden Ansprüche, in welchem das Fahrrad (1; 101; 301) eine elektronische Schaltung (23) aufweist, die mit den elektrischen Kontakten (19; 119; 119a) des Fahrrads verbunden ist, und die Zentraleinheit (31) der Aufnahmestruktur angepasst ist, Informationen mit der elektronischen Schaltung (23) über die elektrischen Kontakte (19; 119, 119a) des Fahrrads und diejenigen (34; 134; 134a) der Aufnahmestruktur des Fahrrads auszutauschen, wenn diese miteinander in Kontakt sind.

5. System nach einem der vorstehenden Ansprüche, in welchem die externe Steuervorrichtung mindestens einen zentralen Server (S) und mehrere zentrale Stationssäulen (2), die jeweils einer Fahrradabstellstation entsprechen, aufweist, wobei die zentralen Stationssäulen einerseits mit dem zentralen Server (S) und andererseits mit mindestens einer elektronischen Zentraleinheit (31) einer Aufnahmestruktur (7; 107; 207; 307; 307a), die zu dieser Fahrradabstellstation gehört, kommunizieren.

6. System nach einem der vorstehenden Ansprüche, in welchem jedes Fahrrad (1; 101; 301) ein Verriegelungselement (10; 110; 310) aufweist und jede Aufnahmestruktur (7; 107; 207; 307; 307a) mindestens einen von der elektronischen Zentraleinheit (31) der Aufnahmestruktur gesteuerten elektrischen Riegel (33, 37; 132, 143, 146; 330, 350) aufweist, der angepasst ist, das Verrieglungselement (10; 110; 310) eines der Fahrräder zurückzuhalten und dadurch das Fahrrad an der Aufnahmestruktur zu verriegeln, wobei der elektrische Riegel von der elektrischen Energiespeichervorrichtung (36) der Aufnahmestruktur elektrisch versorgt wird.

7. System nach Anspruch 6, in welchem jede Aufnahmestruktur mindestens eine Verriegelungsstelle aufweist, die angepasst ist, ein Fahrrad aufzunehmen, und aufweist:
- einen in eine Eingriffsrichtung (E) offenen Schließhaken (8; 108; 308) zur Aufnahme des Verriegelungselements (10; 110; 310) eines Fahrrads durch dessen Einführen in die Eingriffsrichtung (E), und
- den elektrischen Riegel, der ein Sperrelement (38; 130a) aufweist, das bewegbar ist zwischen einerseits einer Verriegelungsposition, in welcher das Sperrelement das Verriegelungselement (10; 110) des Fahrrads in dem Schließhaken einsperren kann, und andererseits einer Entriegelungsposition, in welcher das Sperrelement (38; 130a) ein Einrücken und Ausrücken des Verriegelungselements (10; 110) in den und aus dem Schließhaken erlauben kann.

8. System nach Anspruch 7, in welchem
das Verriegelungselement (110; 310) des Fahrrads einen transversalen Stab (111; 311) aufweist, der sich zwischen zwei Enden in eine Längsachse (Y1) erstreckt,
der Schließhaken (108; 308) mindestens eine in die Eingriffsrichtung (E) offene Aufnahmemulde (128; 328) aufweist, die angepasst ist, den transversalen Stab (111; 311) aufzunehmen, dessen Längsachse (Y1) dabei im Wesentlichen in einer festen horizontalen Achse (Y2) angeordnet ist, die durch die Aufnahmemulde (128; 328) definiert ist, und
der Riegel mindestens ein Betätigungselement (130b) aufweist, das in Verbindung mit dem Sperrelement (130a) ist, wobei das Betätigungselement (130b) zusammen mit dem Sperrelement (130a) in einer vertikalen Ebene, die senkrecht zu der festen horizontalen Achse (Y2) ist, bewegbar ist zwischen:
- einer ersten Position, die der entriegelten Position des Riegels entspricht, in welcher das Betätigungselement (130b) angeordnet ist, um den transversalen Stab (111; 311) des Verriegelungselements zu behindern, wenn der transversale Stab in Eingriffsrichtung (E) in die Aufnahmemulde (128) eingerückt wird, und
- einer zweiten Position, die der verriegelten Position des Riegels entspricht, wobei der transversale Stab (111; 311) des Verriegelungselements angepasst ist, das Betätigungselement (130b) aus seiner ersten in seine zweite Position zu bewegen, wenn der transversale Stab (111; 311) in die Aufnahmemulde (128) eingeführt wird, und wobei das Betätigungselement (130b) angepasst ist, beim Übergang aus seiner ersten in seine zweite Position den Riegel zu betätigen, indem es das Sperrelement (130a) in eine Verriegelungsposition bewegt.

9. Aufnahmestruktur für ein System zum automatischen Lagern von Fahrrädern nach einem der vorstehenden Ansprüche, die angepasst ist, ein Fahrrad (1; 101; 301) zu verriegeln, das eine elektrische Energiespeichervorrichtung, elektrische Kontakte und eine elektrische Versorgungsschaltung, die die elektrische Energiespeichervorrichtung mit den elektrischen Kontakten verbindet, aufweist, wobei die Aufnahmestruktur aufweist:
* mindestens eine elektronische Zentraleinheit (31), die angepasst ist, mit einer externen Steuervorrichtung (2, S) zu kommunizieren, um selektiv ein Ausleihen eines an der Aufnahmestruktur verriegelten Fahrrads zu erlauben,
* eine elektrische Versorgungsschaltung (32), die mit der elektronischen Zentraleinheit (31) der Aufnahmestruktur verbunden ist,
* elektrische Kontakte (34; 134; 134a), die angepasst sind, in gegenseitigem Kontakt mit den jeweiligen elektrischen Kontakten eines an der Aufnahmestruktur verriegelten Fahrrads zu kommen und dabei die elektrische Versorgungsschaltung des Fahrrads mit der elektrischen Versorgungsschaltung (32) der Aufnahmestruktur zu verbinden,
**dadurch gekennzeichnet, dass** die elektrische Versorgungsschaltung (31) der Aufnahmestruktur angepasst ist, von der elektrischen Energiespeichervorrichtung des Fahrrads elektrisch versorgt zu werden, wenn das Fahrrad an der Aufnahmestruktur verriegelt ist,
dass die Versorgungsschaltung der Aufnahmestruktur mit keiner anderen externen elektrischen Energiequelle verbunden ist als der elektrischen Energiespeichervorrichtung des Fahrrads und
dass die elektronische Zentraleinheit (31) der Aufnahmestruktur mit einer Kommunikationsschnittstelle (40) verbunden ist, die angepasst ist, über eine drahtlose Verbindung mit einer externen Steuervorrichtung zu kommunizieren.

## Claims

1. Automatic cycle storage system comprising:
- a plurality of cycles (1; 101; 301) each comprising:
• an electric power storage device (25),
• electrical contacts (19; 119; 119a),
• an electrical supply circuit (24) connecting the electric power storage device (25) to said electrical contacts (19; 119; 119a),
- a plurality of fixed docking structures (7; 107; 207; 307; 307a) to which said cycles (1; 101; 301) can be fixed, each comprising:
• at least one central processing unit (31),
• an electrical supply circuit (32) connected to the central processing unit (31) of the docking structure,
• electrical contacts (34; 134; 134a) capable of coming into mutual contact with the respective electrical contacts (19; 119; 119a) on a cycle (1; 101; 301) locked to the docking structure, while connecting the electrical supply circuit (24) of the cycle to the electrical supply circuit (32) of the docking structure,
- an external control device (2, S; S) communicating with the central processing unit (31) of the docking structure and being capable of selectively authorising the borrowing of the cycles (1; 101; 301) locked to the docking structures,
**characterized in that** the electrical supply circuits (24, 32) of the cycle and the docking structure are capable of allowing the electric power storage device (25) on the cycle to supply the electrical supply circuit (32) on the docking structure with power when the cycle is locked to the docking structure,
**and in that** the electrical supply circuit of the docking structure is not connected to any external electric power source other than the electric power storage device (25) on the cycle, and the central processing unit (31) on the docking structure communicates with an external control device (2, S) by means of a wireless link.

2. System according to claim 1, in which each docking structure (7; 107; 207; 307; 307a) comprises an electric power storage device (36) connected to the electrical supply circuit (32) of the docking structure in order to power the central processing unit (31) of the docking structure, the electrical supply circuits (24, 32) of the cycle and the docking structure being capable of enabling the electric power storage device (25) on the cycle to charge the electric power storage device (36) on the docking structure when the cycle is locked to the docking structure.

3. System according to any one of the previous claims, in which each cycle (1; 101) also comprises an electric generator (26) capable of charging the electric power storage device (25) on the cycle and of being driven by the moving of said cycle.

4. System according to any one of the previous claims, in which the cycle (1; 101; 301) comprises an electronic circuit (23) connected to said electrical contacts (19; 119; 119a) on the cycle and said central unit (31) of the docking structure is capable of exchanging information with the electronic circuit (23) on the cycle by means of said electrical contacts on the cycle (19; 119; 119a) and the docking structure (34, 134, 134a) when they are in mutual contact.

5. System according to any one of the previous claims, in which the external control device comprises at least a central server (S) and several central station terminals (2) each corresponding to a cycle storage station, the central station terminals communicating on the one hand with the central server (S) and on the other hand with at least one central processing unit (31) of a docking structure (7; 107; 207; 307; 307a) belonging to the same cycle storage station.

6. System according to any one of the previous claims, in which each cycle (1; 101; 301) comprises a locking component (10; 110; 310) and each docking structure (7; 107; 207; 307; 307a) comprises at least one electric lock (33, 37; 132, 143, 146; 330, 350) controlled by the central processing unit (31) of the docking structure and capable of holding the locking component (10; 110; 310) of one of the cycles thus locking said cycle to the docking structure, said electric lock being supplied with electric power by the electric power storage device (36) on the docking structure.

7. System according to claim 6, in which each docking structure comprises at least one locking station capable of receiving a cycle and including:
- a keeper (8; 108; 308) open in an engagement direction (E) and capable of receiving the locking component (10; 110; 310) of a cycle by insertion in said engagement direction (E),
- and said electric lock, comprising a blocking component (38; 130a) mobile between on the one hand, a locked position in which said blocking component is capable of blocking the locking component (10; 110) of the cycle in the keeper and on the other hand, an unlocked position in which the blocking component (38; 130a) is capable of allowing the locking component (10; 110) to enter and exit the keeper.

8. System according to claim 7, in which the cycle locking component (110; 310) comprises a transverse bar (111; 311) extending along a longitudinal axis (Y1) between two ends, the keeper (108; 308) comprises at least one receiving trough (128; 328) open in said engagement direction (E) and capable of receiving said transverse bar (111; 311) with its longitudinal axis (Y1) arranged substantially along a fixed horizontal axis (Y2) defined by the receiving trough (128; 328), and the lock comprises at least one actuating component (130b) that is connected to the blocking component (130a), said actuating component (130b) being mobile with the blocking component (130a) in a vertical plane perpendicular to said fixed horizontal axis (Y2), between:
- a first position corresponding to the unlocked position of the lock, in which said actuating component (130b) is arranged to interfere with the transverse bar (111; 311) on the locking component when said transverse bar is engaged in the receiving trough (128) in the engagement direction (E),
- and a second position corresponding to the locked position of the lock, said transverse bar (111; 311) on the locking component being capable of moving the actuating component (130b) from its first to its second position when said transverse bar (111; 311) is inserted into the receiving trough (128), and said actuating component (130b) being capable of actuating the lock when it passes from its first to its second position moving the blocking component (130a) to the locked position.

9. Docking structure for an automatic cycle storage system according to any one of the previous claims, capable of locking a cycle (1; 101; 301) that comprises an electric power storage device, electrical contacts and an electrical supply circuit connecting the electric power storage device to said electrical contacts, said docking structure comprising:
• at least one central processing unit (31) capable of communicating with an external control device (2, S) for selectively authorising the borrowing of a cycle locked to the docking structure,
• an electrical supply circuit (32) connected to the central processing unit (31) of the docking structure,
• electrical contacts (34; 134; 134a) capable of coming into mutual contact with the respective electrical contacts on a cycle locked to the docking structure, connecting the electrical supply circuit of the cycle to the electrical supply circuit (32) of the docking structure,
**characterized in that** the electrical supply circuit (31) of the docking structure is capable of being supplied with electricity by the electric power storage device on the cycle when the cycle is locked to the docking structure,
**in that** the electrical supply circuit of the docking structure is not connected to any external electric power source other than the electric power storage device on the cycle,
**and in that** the central processing unit (31) on the docking structure is connected to a communication interface (40) adapted to communicate with an external control device by means of a wireless link.
